# EUROPEAN PATENT SPECIFICATION

(11) **EP 0 600 677 B1**
(45) Date of publication and mention of the grant of the patent: **02.09.1998**
(21) Application number: 93309453.4
(22) Date of filing: 26.11.1993
(51) Int. Cl.: G03B 31/02, H04N 5/91, G11B 20/10

(54) **Cinefilm and recording and reproduction thereof**
Kinofilm und seine Aufnahme und Wiedergabe
Pellicule cinématographique et enregistrement et reproduction de celle-ci

(30) Priority: 30.11.1992 JP 320918/92; 22.12.1992 JP 356935/92; 16.06.1993 JP 168397/93
(43) Date of publication of application: 08.06.1994
(73) Proprietor: SONY CORPORATION, Tokyo (JP)
(72) Inventor: Yoshimura, Shunji, c/o Intellectual Property Div., Shinagawa-ku, Tokyo 141 (JP); Ichimura, Isao, c/o Intellectual Property Div., Shinagawa-ku, Tokyo 141 (JP); Akiyama, Yoshiyuki, c/o Intellectual Property Div., Shinagawa-ku, Tokyo 141 (JP); Watanabe, Toshio, c/o Intellectual Property Div., Shinagawa-ku, Tokyo 141 (JP); Ohsato, Kiyoshi, c/o Intellectual Property Div., Shinagawa-ku, Tokyo 141 (JP); Katsuramoto, Shinji, Intellectual Property Div., Shinagawa-ku, Tokyo 141 (JP)
(74) Representative: Cotter, Ivan John

(56) References cited:
- WO-A-91/16709
- WO-A-92/14239
- US-A- 4 600 280

## Description

This invention relates to cinefilms and to the recording and reproduction thereof.

Conventional cinefilm sound tracks optically record audio signals in analog form. The present applicants have proposed a technique for recording digital patterns to meet a demand for a higher sound quality of speech (Japanese Patent Applications Nos. 03-222 342 and 03-265 001). There has also been proposed a cinefilm in which the areas left between film-feed perforations (sprocket holes) are used as digital pattern recording areas. Such a cinefilm is disclosed in International (PCT) Patent Application Publication No. WO-A-92/14239 wherein audio data is recorded in the digital pattern recording area together with alignment patterns which assist in location of the data symbols during reproduction. Similar cinefilms are disclosed in WO-A-91/16709 and US-A-4600280 where the region between the sprocket holes and the image recording area of the cinefilm is utilised for recording the digital pattern.

When reproducing (projecting) such cinefilm, there is a demand for sound reproduction with rich ambience. There is also a problem in that stable audio data cannot be obtained due to film pitching and rolling caused by film feed. In general, a playback accuracy as high as that achieved with tape feed in an audio playback device cannot be achieved with a cinefilm reproducing device; hence, it is desired to stabilize reproduced digital data. The present invention was devised in the light of the above background.

According to a first aspect of the invention there is provided a cinefilm comprising:
an image recording area having a plurality of images consecutively recorded thereon;
a perforation section provided on at least one side of the image recording area for sequentially feeding the cinefilm during image projection; and
a digital pattern recording area, provided in the vicinity of the or each said perforation section, comprising an audio data recording area and a tracking pattern recording area;
wherein audio data is recorded in the audio data recording area as a digital pattern comprising a succession of transverse tracks, each comprising a row of dots representing first or second values, forming a two-dimensional array of dots;
and wherein the tracking pattern recording area comprises first and second sections, tracking pattern data being recorded therein as a transverse string of dots of the first data value in one of said first and second sections for each said track and a transverse string of dots of the second data value in the other of said first and second sections for each said track, the data values of dot strings in each section being different for adjacent tracks.

According to a second aspect of the invention there is provided a recording device for a cinefilm, the device comprising:
a conversion circuit section for converting audio data and tracking pattern data into dot-pattern data, the audio data being converted by data compression;
a spatial modulating section for optically modulating recording light in accordance with the dot-pattern data produced by said conversion circuit section; and
means for radiating the modulated recording light onto cinefilm to record said data in a digital pattern recording area provided in the vicinity of a perforation section of the cinefilm, the digital pattern recording area comprising an audio data recording area and a tracking pattern recording area and the tracking pattern recording area comprising first and second sections;
wherein the recording device is arranged to record the audio data in the audio data recording area as a digital pattern comprising a succession of transverse tracks, each comprising a row of dots representing first or second values, forming a two-dimensional array of dots, and to record the tracking pattern data in the tracking pattern recording area as a transverse string of dots of the first data value in one of said first and second sections for each said track and a transverse string of dots of the second data value in the other of said first and second sections for each said track, the data values of dot strings in each section being different for adjacent tracks.

According to a third aspect of the invention there is provided a device for reproducing audio data from a cinefilm as claimed in any one of claims 1 to 14, the device comprising:
means for optically reading the digital pattern recording area of the cinefilm;
an audio data reproducing circuit section for reproducing the audio data area read from the digital pattern recording area of the cinefilm; and
a tracking pattern reproducing circuit section for detecting the tracking pattern data read from the digital pattern recording area of the cinefilm, wherein said tracking pattern reproducing circuit section is arranged to perform tracking by taking the difference between the tracking pattern data recorded for a said track in said first and second sections of said tracking pattern recording area of the cinefilm.

Preferred forms of implementation of the invention described hereinbelow provide a cinefilm enabling:
high-quality audio signals to be reproduced by digital processing;
reliable reproduction of audio data in a playback system;
stable tracking to be performed in a playback system;
a sound field rich in ambience to be achieved in a playback system;
playback clocks in a playback system to be facilitated;
audio data errors due to grazed film to be minimized and the rate of error occurrence in the audio data in a playback system to be lowered;
audio data errors to be corrected in a playback system to enable reliable reproduction of the audio data; and
digital processing of audio data on a block basis in a recording system or in a playback system.

The preferred forms of implementation of the invention also provide a recording device for formulating a cinefilm:
capable of reproducing a sound field rich in ambience in a playback system;
capable of simultaneously recording analog audio signals and audio data;
with which playback clocks may be formulated easily in a playback system;
with which the rate of error occurrence in audio data may be lowered;
with which error correction of audio data may be performed in a playback system; and
on which audio data of plural channels may be digitally processed and recorded on a block basis.

The preferred forms of implementation of the invention also provide a reproducing device for a cinefilm enabling:
digital patterns in a digital pattern recording area of the cinefilm to be read for reliably reproducing audio data;
stable tracking to be achieved for reliably reproducing audio data;
a sound field rich in ambience to be reproduced;
audio data of plural channels to be reliably reproduced;
audio data to be corrected for errors for reliably reproducing audio data of plural channels; and
audio data of plural channels to be digitally processed on a block basis for reliably reproducing the audio data.

The invention will now be further described, by way of illustrative and non-limiting example, with reference to the accompanying drawings, in which like parts are designated by like references throughout, and in which:
Fig. 1 shows a cinefilm embodying the invention;
Fig. 2 is an enlarged view showing a digital pattern recorded in a digital data area of the cinefilm;
Fig. 3 shows an optical system for reproducing a digital pattern recorded in the digital data area of the cinefilm;
Fig. 4 is a circuit block diagram showing an arrangement for electrically processing digital data obtained by the optical system shown in Fig. 3;
Fig. 5 is a waveform diagram showing data processed by sample-and-hold circuits shown in Fig. 4;
Fig. 6 is a block circuit diagram showing an arrangement of a recording device for a cinefilm embodying the invention;
Fig. 7 is a diagrammatic view showing a sector construction of audio data recorded on the cinefilm by the recording device;
Fig. 8 illustrates a process of generating recording dot pattern data by 8-9 conversion for audio data [000102] recorded on the cinefilm by the recording device shown in Fig. 6;
Fig. 9 is a diagrammatic view showing a block construction of audio data recorded on the cinefilm by the recording device shown in Fig. 6;
Fig. 10 is a block diagram of a recording clock generator of the recording device;
Fig. 11 is a schematic plan view showing a state of array of spatial modulators of first and second optical recording units of the recording device shown in Fig. 6;
Fig. 12 is a schematic perspective view showing an arrangement of the spatial modulators;

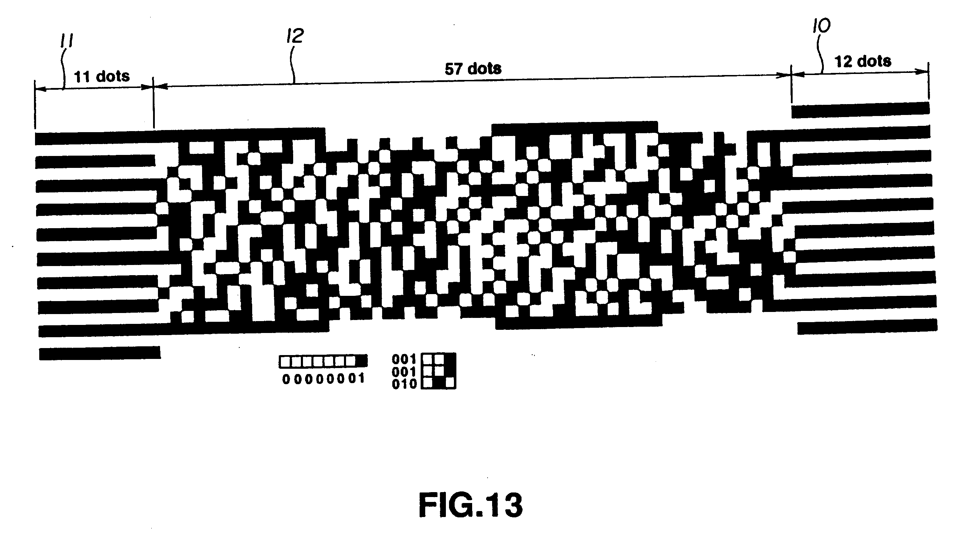

Fig. 13 is a diagrammatic view showing the recording format of a cinefilm on which audio data are recorded by the recording device shown in Fig. 6;
Fig. 14 is a diagrammatic plan view showing an alternative state of array of the spatial modulators of the first and second optical recording units of the recording device shown in Fig. 6;
Fig. 15 is a block diagram showing an arrangement of a reproducing device for a cinefilm embodying the invention;
Fig. 16 illustrates a schematic arrangement of a projecting device loaded with the cinefilm reproducing device embodying the invention;
Fig. 17 is a schematic view showing an 8-channel digital sound system supplied with audio data reproduced by the reproducing device;
Fig. 18 is an enlarged view showing a digital pattern recorded in a digital data area of a cinefilm according to a modified embodiment of the invention;
Fig. 19 is a block circuit diagram showing an arrangement of a synchronous control system in a reproducing device for reading and reproducing the digital pattern recorded in the digital recording area of the cinefilm shown in Fig. 18; and
Fig. 20 is a timing chart for illustrating the operation of the synchronous control system.

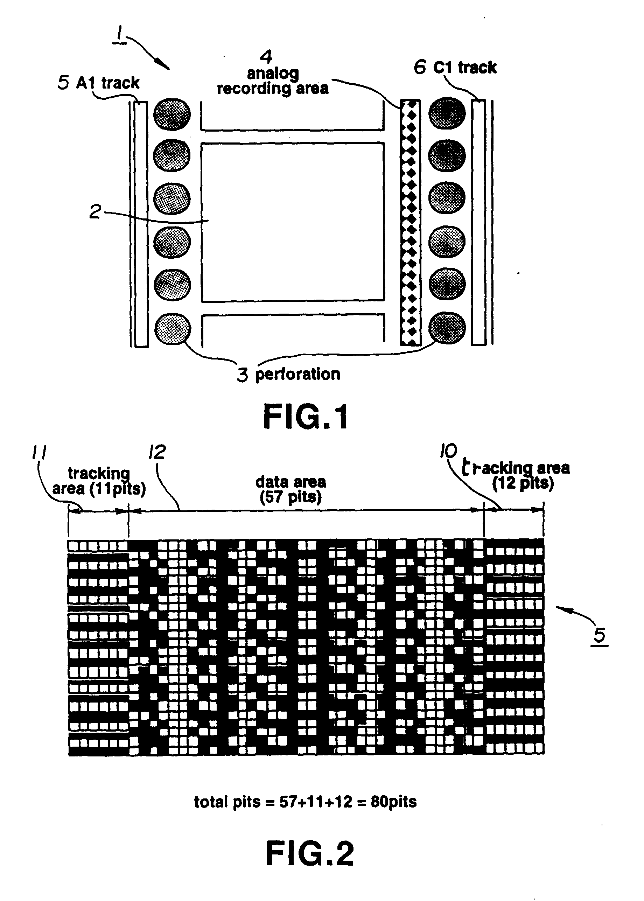

A cinefilm embodying the invention is arranged as shown for example in Fig. 1.

Fig. 1 shows a cinefilm 1 provided with a picture recording area 2 for recording a picture to be projected, perforations 3 acting as an aid for feeding the cinefilm for projection, an analog data recording area 4 in which analog audio data is optically recorded as in conventional cinefilms for enabling the audio data to be reproduced, and digital pattern recording areas 5, 6 on the outer sides of the perforations 3, 3 on the left and right sides, respectively, of the cinefilm 1.

Fig. 2 shows the digital pattern recording area 5 (6) shown in Fig. 1. The pattern shown in Fig. 2 is recorded on each side of the cinefilm 1 as a digital pattern. The pattern is made up of track pattern recording areas 10, 11 and an audio data recording area 12 intermediate between the recording areas 10, 11.

In the audio data recording area 12, digitized audio signals are recorded as a pattern of white and black regions. Such pattern is constructed as a two-dimensional region made up e.g. of three dots by three tracks by one byte. A sum total of eight patterns [000] to [111] may be provided as patterns of three dots in the transverse direction. However, a pattern of [000] consisting only of white regions is not employed during recording in order to prevent the situation in which the state devoid of signals is produced for a prolonged time due to run-length limitations caused by the edge recording of the recording pulses during recording. Consequently, digital values of the seven patterns may be set. Three such patterns are arrayed in the vertical direction by three tracks to constitute one byte.

With such pattern, 7³ = 343 patterns may be obtained for each byte. Of these, 256 patterns, for example, are adopted and associated with 8-bit signals. In the audio data recording area 12, the ECC information, time scale information, channel information etc. may be recorded, in addition to the audio information.

The tracking pattern recording areas 10, 11 are provided on the left and right sides of the audio data recording area 12. The track patterns are recorded with a shift of one track relative to each other. In one of the digital pattern recording areas 5 and 6, there are recorded four channels, whereas, in the other of the digital pattern recording areas, there are similarly recorded four channels, so that the number of the channels is totalled at eight. Besides, the audio data are segmented into blocks at an interval e.g. of 16 tracks. The numbers of pits for the respective regions 5 and 6 are indicated in Fig.2. Although the number of pits for the tracking pattern recording area 10 differs from that for the tracking pattern recording area 11, this is merely a matter of design irrelevant to the present invention and hence is not explained herein. It will also be seen from Fig.2 that there are indicated 24-track data.

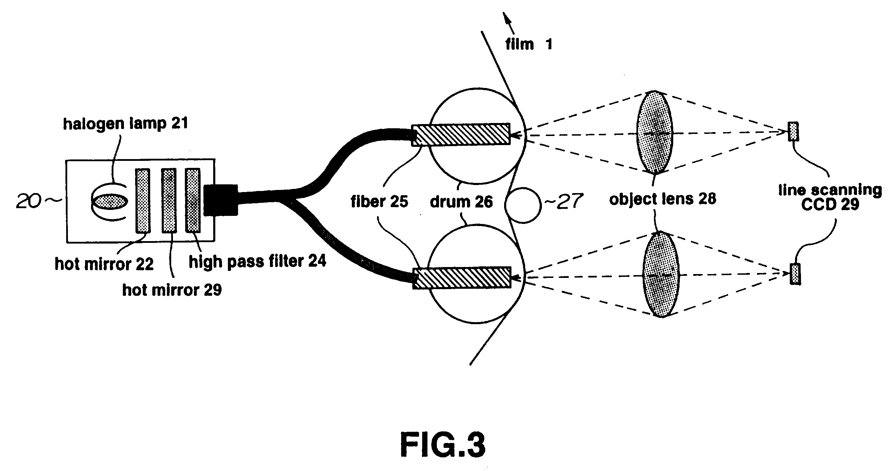

Fig.3 shows an optical reproducing system. A light source device 20 is made up of a halogen lamp 21, hot mirrors 22, 23 for interrupting heat rays or infrared rays and a high-pass filter 24 for improving the S/N ratio.

The light exiting from the light source device 20 is split by optical fibers 25, 25 in two directions for illuminating the digital pattern recording areas 5 and 6 arranged on both sides of the cinefilm 1. The light rays exiting from the ends of the optical fibers 25, 25 are radiated on the cinefilm 1 in the vicinity of film-feed drums 26, 26. The cinefilm 1 is fed in the vertical direction in Fig.3. 27 is an auxiliary roll for film feed.

Digital pattern images obtained by illumination of the cinefilm 1 are radiated on line scanning CCDs 29, 29 via object lenses 28, 28. This causes the information of the digital audio tracks to be supplied to an electric circuit. In Fig.3, the optical fiber 25, drum 26, object lens 28 and the CCD 29 are associated with each of the digital pattern recording areas 5 and 6. Thus, although not shown in Fig.3, upper and lower side optical systems in Fig.3 are arranged ahead of and at back of the drawing sheet for reading the digital pattern recording areas 5 and 6, respectively.

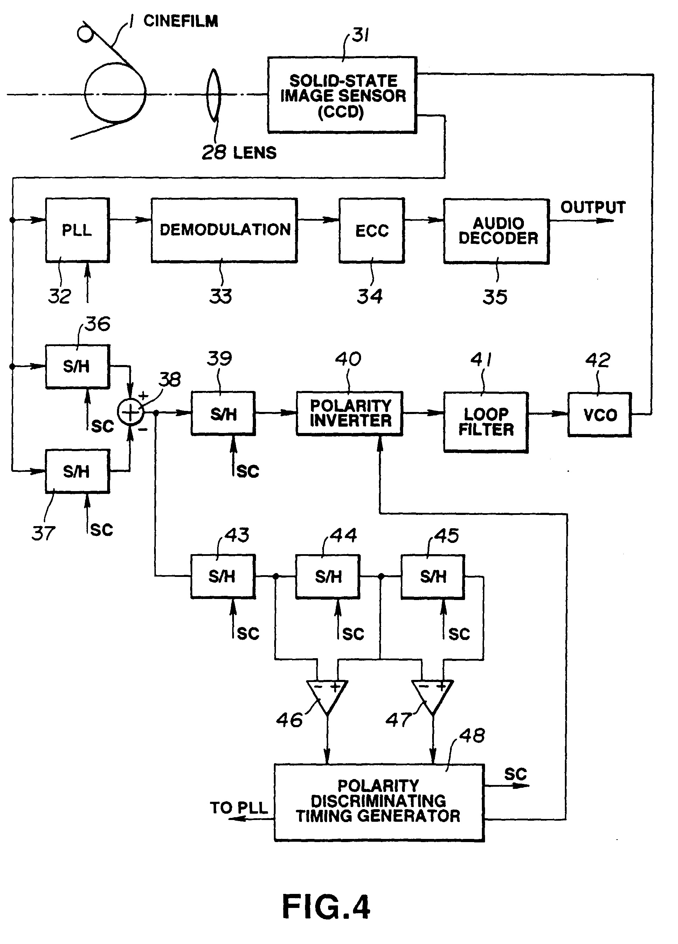

Fig.4 is a block diagram of an electric circuit for processing the information of the digital audio patterns obtained from the arrangement shown in Fig.3. Although the circuit shown in Fig.4 is provided for each of the digital pattern recording areas 5 and 6, only one of the circuits is shown herein for simplicity.

The digital pattern is captured as an image by a CCD line sensor 31 (the CCD scanning CCD 29 shown in Fig.3). The width of the CCD line sensor 31 along the longitudinal direction of the cinefilm 1 is substantially one half or less than one half an image of one digital data track formed on the CCD line sensor 31. When capturing the digital data, the CCD line sensor 31 scans the one track twice, that is scans an on-track portion once and an off-track portion once in a timed relation relative to each other to produce stable the audio sound. The scanning timing is controlled by an arrangement which will be explained subsequently.

The playback signals produced by the CCD line sensor 31 are entered to a PLL circuit 32. The data in the audio data recording area 12 is of a self-synchronizable 3 x 3 pattern as described above and an output signal of the PLL circuit 32 is synchronized on the channel clock basis. The output of the PLL circuit 32 is demodulated by a demodulator 33 and corrected for errors in an ECC circuit 34. The resulting signals are decoded by an audio decoder 35. so as to be outputted as output audio data.

The playback signals from the CCD line sensor 31 are also entered at sample-and-hold (S/H) circuits 36, 37. The data of the tracking pattern recording areas 10 and 11 are sample-held by the S/H circuits 36 and 37, respectively.

Output signals of the S/H circuits 36, 37 are supplied to a subtractive node 38 to produce difference data which is supplied to a sample-and-hold (S/H) circuit 39. The S/H circuit 39 sample-holds sample values of off-track points (zero-crossing points). An off-track means a state in which the CCD line sensor reading out the digital data scans a portion between neighboring tracks of a data pattern. Tracking servo is applied for reducing the sample value of the off-track points to zero in a manner as explained subsequently. In general, tracking servo is preferably applied based on the on-track information, that is on data obtained when the CCD line sensor reading out the digital data is just scanning the data track. However, as long as the servo circuit configuration is concerned, it is easier to detect the off-track condition.

In case of a tracking deviation, normally positive data or normally negative data are outputted at all times from a polarity invertor 40 so that a polarity matched to the direction of the deviation caused by the film feed is outputted by the polarity invertor 40.

The output is supplied to a loop filter 41 and error signals up to a pre-set band are integrated. The output of the loop filter is frequency-controlled by a VCO circuit 42 to generate scanning timing signals for the CCD line sensor 31 to cause the sensor 31 to follow up with film wobbling.

The portion in the circuit of Fig.4 adapted for generating various timings is explained. Output data of the subtractive node 38 is supplied to sample-and-hold (S/H) circuits 43, 44 and 45. These S/H circuits are functionally equivalent to shift registers so that sample data of a current scanning by the CCD line sensor 31, a scanning directly preceding the current scanning by the CCD line sensor 31 and a scanning preceding the current scanning by two successive scannings by the CCD line sensor 31, are outputted by the S/H circuit 43, S/H circuit 44 and by the S/H circuit 45, respectively.

The difference information between these scanning sample data is detected by comparators 46, 47 and corresponding outputs are supplied to a polarity discriminating and timing generating circuit 48, which detects a pattern of the data increasing in the sequence of the S/H circuits 43, 44 and 45. Such pattern indicates that the sample data directly preceding the current sample is off-track. The polarities of the respective scanning samples may be discriminated simultaneously.

Based on the discriminating operation, the polarity discriminating and timing generating circuit 48 generates sample clocks SC, positive or negative signals and on-track information to transmit the sample clocks, positive or negative signals and the on-track information to the S/H circuits, polarity invertor 40 and to the PLL circuit 32, respectively.

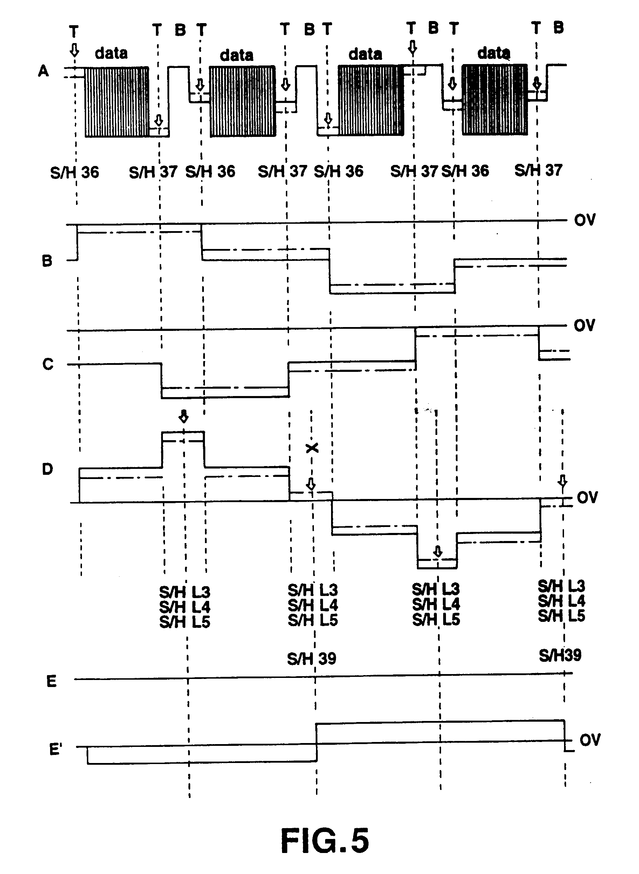

The operation of the S/H circuits and the produced data are shown in Fig.5, in which pulses indicated by solid lines indicate the on-tracking state and pulses indicated by broken lines indicate the off-tracking state, respectively. The waveform A represents digital data obtained from the CCD line sensor 31. The-digital data is roughly divided into a valid region and a blanking region B. The valid region is subdivided into a digital audio data sub-region and a tracking data sub-region T. The S/H circuit 36 samples one of the tracking data in the digital pattern recording area, while the S/H circuit 37 samples the other tracking data in the digital pattern recording area. In Fig.5, arrow marks indicate the positions of sampling timings in the S/H circuits.

The waveform B and the waveform C indicate output data of the S/H circuits 36 and 37, respectively. The difference between the sample-held output data is taken by the subtractive node 38. The waveform D represents the resulting output data.

The S/H circuits 43, 44 and 45 are controlled for sampling the on-track portions. The resulting data is entered to the polarity discriminating and timing generating circuit 48 where the state of the data volume being increased in the order of the S/H circuits 43, 44 and 45 as mentioned above is detected so that center data shown by an asterisk ∗ in Fig.5 is found to be off-track.

When the off-track position is detected, a control signal is supplied to the S/H circuit 39 for sampling the data at this position and an amount of track deviation indicating how far the sample data is deviated from the zero level is obtained as an output of the S/H circuit 39. Consequently, if the correct tracking state at the off-track position is achieved, that is if O-level data is obtained, an output of the S/H circuit 39 becomes zero. If the tracking is deviated a pre-set amount, an output data corresponding to the deviation is outputted, as indicated at E' in Fig.5.

This data is supplied to the polarity invertor 40 where the positive and negative deviations of the off-track portions are inverted to negative and positive values, respectively, for generating constant deviations.

Although the amount of tracking deviation is corrected in the present embodiment by taking a difference between tracking data 11 and 12, the present embodiment is effective in coping with fluctuations in the illumination in the light source device 20, development fluctuations produced when recording digital data on the cinefilm or with amplitude fluctuations in the playback signals produced due to individual differences.

A specific embodiment of a recording device for recording audio data in the digital pattern recording area of a cinefilm embodying the present invention is hereinafter explained.

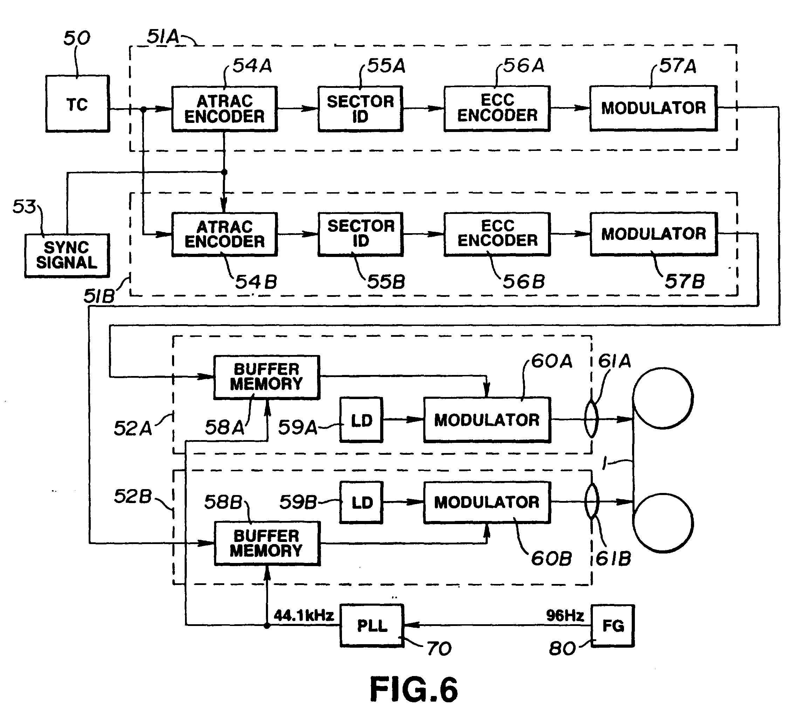

The recording device for the cinefilm embodying the present invention is arranged as shown for example in Fig.6.

The recording device for the cinefilm is made up of first and second converting circuit sections 51A, 51B for converting the 8-channel audio data supplied from a multi-channel tape decoder 50 by data compression into dot-pattern data, and first and second optical recording units 52A, 52B for performing optical recording in accordance with dot-pattern data from the first and second converting circuit sections 51A and 51B. The 8-channel audio data are recorded as the digital pattern in the digital pattern recording areas provided in the vicinity of perforations of the cinefilm 1.

The first and second converting circuit sections 51A and 51B are adapted for processing four channels each of the 8-channel audio data supplied from the multi-channel decoder 50, and are each made up of data compressing circuit sections 54A and 54B, sector-forming circuit sections 55A and 55B, ECC encoders 56A and 56B and modulating circuits 57A and 57B, all of which are operated responsive to control signals supplied from a synchronizing signal generator 53.

The data compression circuit section 54A performs a data compressing operation on the four-channel audio data by high efficiency encoding, which is a combination of sub-band coding, orthogonal transform coding and bit allocation, for compressing the data volume to one-fifth. Similarly, the data compression circuit section 54B performs a data compressing operation on the remaining four-channel audio data by high efficiency encoding, which is a combination of sub-band coding, orthogonal transform coding and bit allocation, for compressing the data volume to one-fifth.

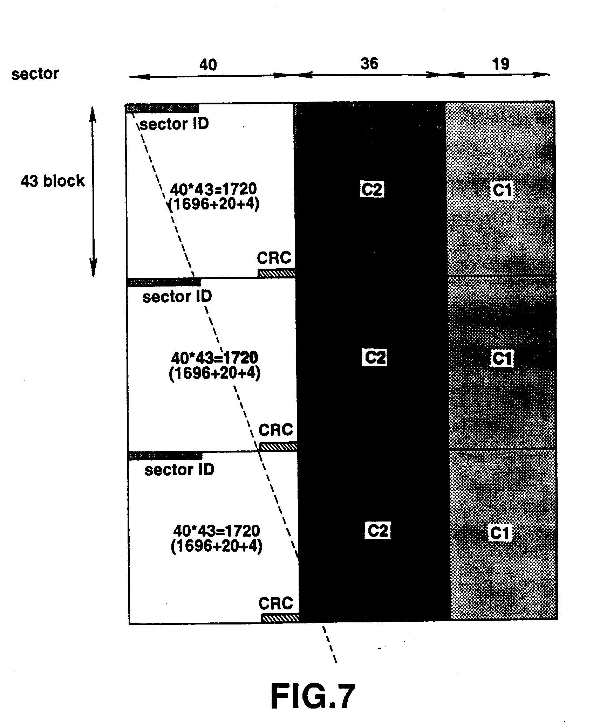

The sector-forming circuit 55A forms, from the compressed four-channel audio data from the data compressing circuit section 54A, 40 x 43 = 1720 byte sector data consisting of 1696 byte data with 20-byte sector data ID and 4-byte CRC data appended thereto, as shown in Fig.7. Similarly, the sector-forming circuit 55B forms, from the compressed four-channel audio data from the data compressing circuit section 54B, 40 x 43 = 1720 byte sector data consisting of 1696 byte data with 20-byte sector data ID and 4-byte CRC data appended thereto.

The ECC encoder 56A generates, for the 4-channel audio data formed into a sector by the sector-forming circuit 55A, 36-byte C2 parity data at an interval of 40 bytes in an oblique direction shown by a broken line in Fig.7, while forming, for the same 4-channel data, 19-byte C1 parity data at an interval of 76 bytes in the horizontal direction. Similarly, the ECC encoder 56B generates, for the 4-channel audio data formed into a sector by the sector-forming circuit 55B, 36-byte C2 parity data at an interval of 40 bytes in an oblique direction shown by a broken line in Fig.7, while forming, for the same 4-channel data, 19-byte C1 parity data at an interval of 76 bytes in the horizontal direction.

The modulating circuit 57A converts the audio data, having the C2 parity data and the C1 parity data appended thereto by the ECC encoder 56A, by 8-9 conversion into dot-pattern data in which 1-byte data are represented by 9 dots and outputs the resulting converted data. Similarly, the modulating circuit 57B converts the audio data, having the C2 parity data and the C1 parity data appended thereto by the ECC encoder 56B, into dot-pattern data by 8-9 conversion in which 1-byte data are represented by 9 dots and outputs the resulting converted data. In the present embodiment, the converting circuits 57A and 57B performs the 8-9 conversion in accordance with conversion tables shown in Tables 1 to 4 to convert the 1-byte data into two-dimensional dot-pattern data represented by 3 x 3 channel bits. Tracking pattern recording area data are appended to each track, while the audio data recorded in the audio data recording area are modulated by non-return-to-zero inverted (NRZI) modulation system, and the resulting data is outputted as recording dot pattern data.

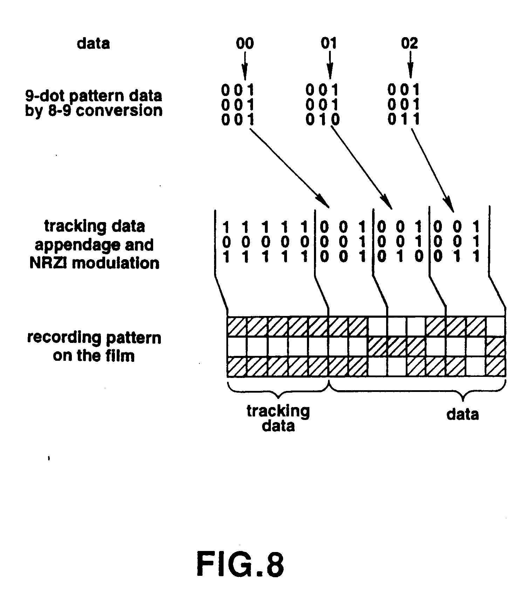

As a specific example, the process of generating the recording dot pattern data for [000101] data as an example is shown in Fig.8.

**TABLE 1**

| input | output (9 dot pattern data) | input | output (9 dot pattern data) |
|---|---|---|---|
| 00 | 049(001:001:001) | 20 | 06D(001:101:101) |
| 01 | 04A(001:001:010) | 21 | 06E(001:101:110) |
| 02 | 04B(001:001:011) | 22 | 077(001:110:111) |
| 03 | 04C(001:001:100) | 23 | 071(001:110:001) |
| 04 | 04D(001:001:101) | 24 | 072(001:110:010) |
| 05 | 04E(001:001:110) | 25 | 073(001:110:011) |
| 06 | 057(001:010:111) | 26 | 074(001:110:100) |
| 07 | 051(001:010:001) | 27 | 075(001:110:101) |
| 08 | 052(001:010:010) | 28 | 076(001:110:110) |
| 09 | 053(001:010:011) | 29 | 0BF(010:111:111) |
| 0A | 054(001:010:100) | 2A | 0B9(010:111:001) |
| 0B | 055(001:010:101) | 2B | 0BA(010:111:010) |
| 0C | 056(001:010:110) | 2C | 0BB(010:111:011) |
| 0D | 05F(001:011:111) | 2D | 0BC(010:111:100) |
| 0E | 059(001:011:001) | 2E | 0BD(010:111:101) |
| 0F | 05A(001:011:010) | 2F | 0BE(010:111:110) |
| 10 | 05B(001:011:011) | 30 | 08F(010:001:111) |
| 11 | 05C(001:011:100) | 31 | 089(010:001:001) |
| 12 | 05D(001:011:101) | 32 | 08A(010:001:010) |
| 13 | 05E(001:011:110) | 33 | 08B(010:001:011) |
| 14 | 067(001:100:111) | 34 | 08C(010:001:100) |
| 15 | 061(001:100:001) | 35 | 08D(010:001:101) |
| 16 | 062(001:100:010) | 36 | 08E(001:001:110) |
| 17 | 063(001:100:011) | 37 | 097(010:010:111) |
| 18 | 064(001:100:100) | 38 | 091(010:010:001) |
| 19 | 065(001:100:101) | 39 | 092(010:010:010) |
| 1A | 066(001:100:110) | 3A | 093(010:010:011) |
| 1B | 06F(001:101:111) | 3B | 094(010:010:100) |
| 1C | 069(001:101:001) | 3C | 095(010:010:101) |
| 1D | 06A(001:101:010) | 3D | 096(010:010:110) |
| 1E | 06B(001:101:011) | 3E | 09F(010:011:111) |
| 1F | 06C(001:101:100) | 3F | 099(010:011:001) |

**TABLE 2**

| input | output (9 dot pattern data) | input | output (9 dot pattern data) |
|---|---|---|---|
| 40 | 09A(010:011:010) | 60 | 0FE(011:111:110) |
| 41 | 09B(010:011:011) | 61 | 0CF(011:001:111) |
| 42 | 09C(010:011:100) | 62 | 0C9(011:001:001) |
| 43 | 09D(010:011:101) | 63 | 0CA(011:001:010) |
| 44 | 09E(010:011:110) | 64 | 0CB(011:001:011) |
| 45 | 0A7(010:100:111) | 65 | 0CC(011:001:100) |
| 46 | 0A1(010:100:001) | 66 | 0CD(011:001:101) |
| 47 | 0A2(010:100:010) | 67 | 0CE(011:001:110) |
| 48 | 0A3(010:100:011) | 68 | 0D7(011:010:111) |
| 49 | 0A4(010:100:100) | 69 | 0D1(011:010:001) |
| 4A | 0A5(010:100:101) | 6A | 0D2(011:010:010) |
| 4B | 0A6(010:100:110) | 6B | 0D3(011:010:011) |
| 4C | 0AF(010:101:111) | 6C | 0D4(011:010:100) |
| 4D | 0A9(010:101:001) | 6D | 0D5(011:010:101) |
| 4E | 0AA(010:101:010) | 6E | 0D6(011:010:110) |
| 4F | 0AB(010:101:011) | 6F | 0DF(011:011:111) |
| 50 | 0AC(010:101:100) | 70 | 0D9(011:011:001) |
| 51 | 0AD(010:101:101) | 71 | 0DA(011:011:010) |
| 52 | 0AE(010:101:110) | 72 | 0DB(011:011:011) |
| 53 | 0B7(010:110:111) | 73 | 0DC(011:011:100) |
| 54 | 0B1(010:110:001) | 74 | 0DD(011:011:101) |
| 55 | 0B2(010:110:010) | 75 | 0DE(011:011:110) |
| 56 | 0B3(010:110:011) | 76 | 0E7(011:100:111) |
| 57 | 0B4(010:110:100) | 77 | 0E1(011:100:001) |
| 58 | 0B5(010:110:101) | 78 | 0E2(011:100:010) |
| 59 | 0B6(010:110:110) | 79 | 0E3(011:100:011) |
| 5A | 0FF(011:111:111) | 7A | 0E4(011:100:100) |
| 5B | 0F9(011:111:001) | 7B | 0E5(011:100:101) |
| 5C | 0FA(011:111:010) | 7C | 0E6(011:100:110) |
| 5D | 0FB(011:111:011) | 7D | 0EF(011:100:111) |
| 5E | 0FC(011:111:100) | 7E | 0E9(011:100:001) |
| 5F | 0FD(011:111:101) | 7F | 0EA(011:101:010) |

**TABLE 3**

| input | output (9 dot pattern data) | input | output (9 dot pattern data) |
|---|---|---|---|
| 80 | 0EB(011:101:011) | A0 | 11F(100:011:111) |
| 81 | 0EC(011:101:100) | A1 | 119(100:011:001) |
| 82 | 0ED(011:101:101) | A2 | 11A(100:011:010) |
| 83 | 0EE(011:101:110) | A3 | 11B(100:011:011) |
| 84 | 0F7(011:110:111) | A4 | 11C(100:011:100) |
| 85 | 0F1(011:110:001) | A5 | 11D(100:011:101) |
| 86 | 0F2(011:110:010) | A6 | 11E(100:011:110) |
| 87 | 0F3(011:110:011) | A7 | 127(100:100:111) |
| 88 | 0F4(011:110:100) | A8 | 121(100:100:001) |
| 89 | 0F5(011:110:101) | A9 | 122(100:100:010) |
| 8A | 0F6(011:110:110) | AA | 123(100:100:011) |
| 8B | 13F(100:111:111) | AB | 124(100:100:100) |
| 8C | 139(100:111:001) | AC | 125(100:100:101) |
| 8D | 13A(100:111:010) | AD | 126(100:100:110) |
| 8E | 13B(100:111:011) | AE | 12F(100:101:111) |
| 8F | 13C(100:111:100) | AF | 129(100:101:001) |
| 90 | 13D(100:111:101) | B0 | 12A(100:101:010) |
| 91 | 13E(100:111:110) | B1 | 12B(100:101:011) |
| 92 | 10F(100:001:111) | B2 | 12C(100:101:100) |
| 93 | 109(100:001:001) | B3 | 12D(100:101:101) |
| 94 | 10A(100:001:010) | B4 | 12E(100:101:110) |
| 95 | 10B(100:001:011) | B5 | 137(100:110:111) |
| 96 | 10C(100:001:100) | B6 | 131(100:110:001) |
| 97 | 10D(100:001:101) | B7 | 132(100:110:010) |
| 98 | 10E(100:001:110) | B8 | 133(100:110:011) |
| 99 | 117(100:010:111) | B9 | 134(100:110:100) |
| 9A | 111(100:010:001) | BA | 135(100:110:101) |
| 9B | 112(100:010:010) | BB | 136(100:110:110) |
| 9C | 113(100:010:011) | BC | 17F(101:111:111) |
| 9D | 114(100:010:100) | BD | 179(101:111:001) |
| 9E | 115(100:010:101) | BE | 17A(101:111:010) |
| 9F | 116(100:010:110) | BF | 17B(101:111:011) |

**TABLE 4**

| input | output (9 dot pattern data) | input | output (9 dot pattern data) |
|---|---|---|---|
| C0 | 17C(101:111:100) | E0 | 169(101:101:001) |
| C1 | 17D(101:111:101) | E1 | 16A(101:101:010) |
| C2 | 17E(101:111:110) | E2 | 16B(101:101:011) |
| C3 | 14F(101:001:111) | E3 | 16C(101:101:100) |
| C4 | 149(101:001:001) | E4 | 16D(101:101:101) |
| C5 | 14A(101:001:010) | E5 | 16E(101:101:110) |
| C6 | 14B(101:001:011) | E6 | 177(101:110:111) |
| C7 | 14C(101:001:100) | E7 | 171(101:110:001) |
| C8 | 14D(101:001:101) | E8 | 172(101:110:010) |
| C9 | 14E(101:001:110) | E9 | 173(101:110:011) |
| CA | 157(101:010:111) | EA | 174(101:110:100) |
| CB | 151(101:010:001) | EB | 175(101:110:101) |
| CC | 152(101:010:010) | EC | 176(101:110:110) |
| CD | 153(101:010:011) | ED | 1BF(110:111:111) |
| CE | 154(101:010:100) | EE | 1B9(110:111:001) |
| CF | 155(101:010:101) | EF | 1BA(110:111:010) |
| D0 | 156(101:010:110) | F0 | 1BB(110:111:011) |
| D1 | 15F(101:011:111) | F1 | 1BC(110:111:100) |
| D2 | 159(101:011:001) | F2 | 1BD(110:111:101) |
| D3 | 15A(101:011:010) | F3 | 1BE(110:111:110) |
| D4 | 15B(101:011:011) | F4 | 18F(110:001:111) |
| D5 | 15C(101:011:100) | F5 | 189(110:001:001) |
| D6 | 15D(101:011:101) | F6 | 18A(110:001:010) |
| D7 | 15E(101:011:110) | F7 | 18B(110:001:011) |
| D8 | 167(101:100:111) | F8 | 18C(110:001:100) |
| D9 | 161(101:100:001) | F9 | 18D(110:001:101) |
| DA | 162(101:100:010) | FA | 18E(110:001:110) |
| DB | 163(101:100:011) | FB | 197(110:010:111) |
| DC | 164(101:100:100) | FC | 191(110:010:001) |
| DD | 165(101:100:101) | FD | 192(110:010:010) |
| DE | 166(101:100:110) | FE | 193(110:010:011) |
| DF | 16F(101:101:111) | FF | 194(110:010:100) |

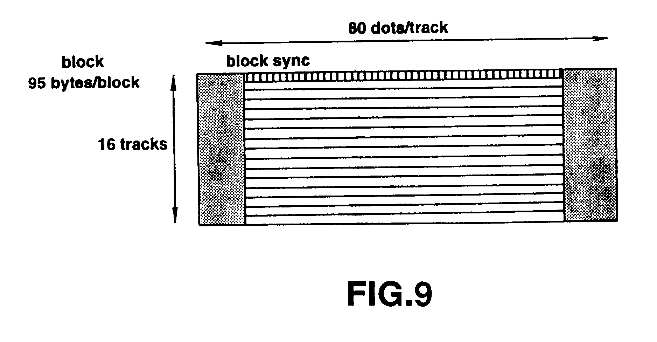

It is noted that 40 bytes of the audio data, 36 bytes of the C2 parity data and 19 bytes of the C1 parity data, totalling at 95 bytes, are arranged into one block. The 95 byte one-block data are allocated into 57 dots × 15 tracks by the modulating circuits 57A, 57B, with 80 dots forming one track and 16 tracks forming one block, with a one-track block sync being provided for each block, as shown in Fig.9.

The first and second optical recording units 52A and 52B are made up of buffer memories 58A and 58B, laser light sources 59A and 59B, spatial modulators 60A and 60B and image-forming lenses 69A and 69B, respectively.

The buffer memories 58A and 58B are operated by recording clocks generated by a recording clock generator 70 for sequentially supplying dot pattern data from the first and second converting circuit sections 51A, 51B to the spatial modulators 60A, 60B. The spatial modulators 59A, 59B modulate the laser light from the laser light sources 59A, 59B in accordance with the dot pattern data. The laser light modulated by the dot pattern data from the spatial modulators 60A, 60B is radiated on the digital pattern areas on the cinefilm 1 for recording data thereon.

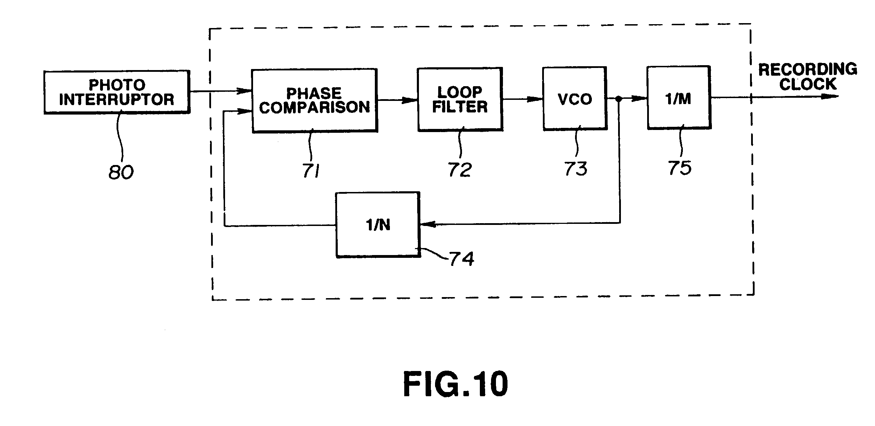

The recording clock generator 70 generates the 44.1 kHz recording clocks by a PLL circuit from 96 Hz frequency signals obtained by detecting the passage of the perforations 2 by a passage detection type photointerruptor 80, and is made up of a phase comparator 71, a loop filter 72, a voltage controlled type oscillator 73, an divide-by-N frequency divider 74 and a divide-by-M frequency divider 75, as shown in Fig.10. The phase comparator 71 compares the phase of the 96 Hz frequency signals obtained by the photointerruptor 80 to that of the signal obtained by divide-by-N frequency division of the oscillation output signals of the voltage controlled oscillator 73 by the divide-by-N frequency divider 74 to transmit the phase error via the loop filter 72 to the voltage controlled oscillator 23 as a control voltage. The voltage controlled oscillator 23 has its oscillation phase controlled by the control voltage. An oscillation output signal having a frequency of M × 44.1 kHz, produced by the voltage controlled oscillator 23, is frequency-divided by a factor of M by the divide-by-M frequency divider 75 to produce the 44.1 kHz recording clocks.

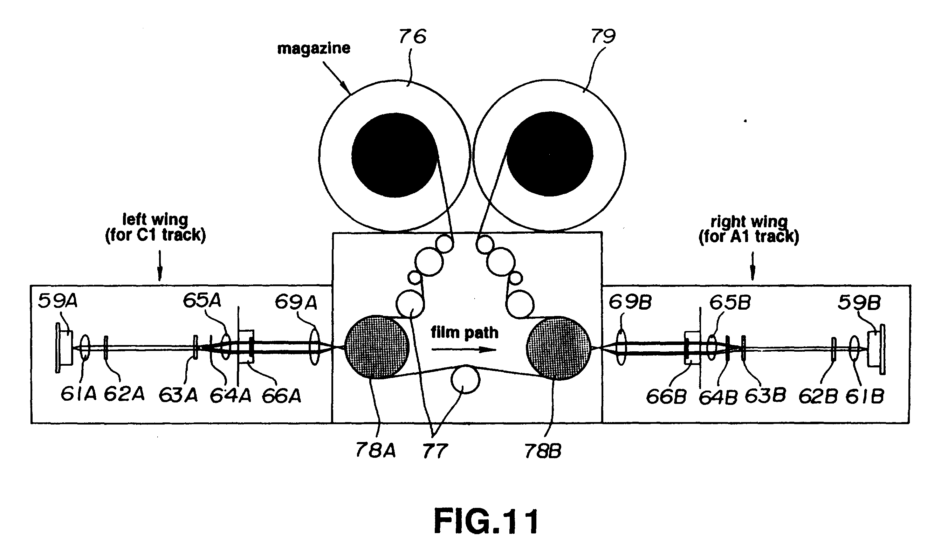

The spatial modulators 60A, 60B of the first and second optical recording units 52A and 52B are arranged facing each other and are made up of collimator lenses 61A, 61B, on which laser beams from the laser light sources 59A, 59B comprised of the semiconductor laser are incident, half wave plates 62A, 62B, diffraction lattice plates 63A, 63B, polarizing plates 64A, 64B, cylindrical lenses 65A, 65B and light modulators 66A, 66B, respectively, as shown in Fig.11.

In Fig.11, the cinefilm 1 is reeled out from a supply reel 76 of a film magazine so as to run along an auxiliary roll 77 and drums 78A, 78B for film feed before being taken up on a take-up reel 79.

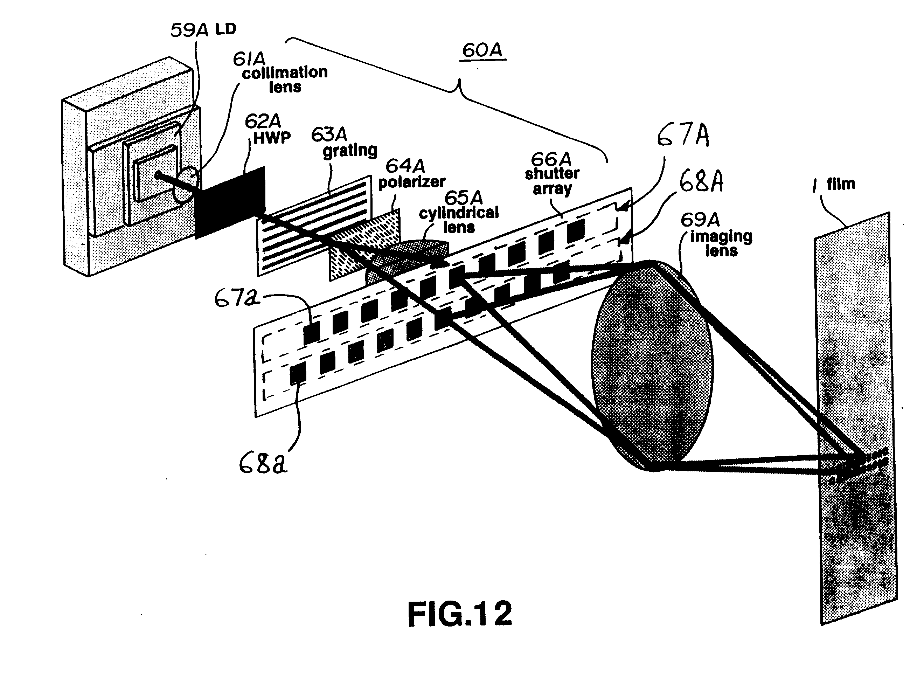

The light modulator 66A is made up of a first aperture line 67A (left wing for C1 track) consisting of a pre-set number of dots or apertures 67a in a straight line and a second aperture line 68A (right wing for Al track) similarly consisting of a pre-set number of dots or apertures 68a in a straight line as shown in Fig.12.

The apertures 67a, 68a of the first and second aperture lines 67A, 68A are arranged so that a land equal in length to one aperture length is left between two adjoining apertures. Besides, the apertures 68a of the second aperture line 68A are positioned directly below the lands between the apertures of the first aperture line 67A. That is, the apertures 67a of the first aperture line 67A are staggered with respect to the apertures 68a of the first aperture line 68A.

With the above-described arrangement of the spatial modulator 60A, when the recording of the audio data is started, the cinefilm 1 is taken up in the direction shown by an arrow in Fig.11, so that a laser beam is radiated from the semiconductor laser, while the audio data is supplied from the buffer memory 58A to the light modulator 66A. The laser beam radiated from the laser light source 59A is collimated by the collimator lens 61A into a collimated light beam which is radiated on the diffraction lattice (grating) plate 63A.

It is noted that the position of an image of a light-emitting end face of the semiconductor laser of the laser light source 59A by the collimator lens 61A is adjusted so as to be closer to the cinefilm 1 within the depth of focus. This causes the laser beam to be transmitted as a converging light through the light modulator 66A so as to be converged at the focal point. Since the laser beam is a low coherency light, it is possible to prevent the speckled noise from being produced if the image is substantially formed within the depth of focus. This means that the angle of field of the laser beam is narrowed as viewed from an imaging lens 4. Consequently, the kick (reflection) of the laser beam within the imaging lens 69A as well as deterioration of the light volume by image formation outside the optical axis and increase in aberration may be prevented from occurring to improve the image-forming properties.

The diffraction lattice plate 63A is adjusted to cause a maximum amount of the first-order diffracted light to be radiated, so that the first and second laser beams as the ± first order diffracted light are formed from the laser beam radiated from the collimator lens 61A via the half wave plate 62A so as to be incident via the polarizer plate 64A on the cylindrical lens 65A.

The cylindrical lens 65A re-radiate the first and second laser beams after changing the optical paths so that these laser beams may be radiated on the first and second aperture lines 67A, 68A of the light modulator 66A at a small angle of incidence.

The light modulator 66A causes the laser beam radiated on the apertures 67a and 68a of the aperture lines 67A and 68A to be transmitted therethrough. At this time, the laser beams transmitted through the apertures 67a, 68a to be changed in phase depending on the audio data supplied from the buffer memory 58A for modulating the laser beam intensity by taking advantage of so-called photoelectric effects for converting the electrical audio data into signals of spatial light intensities. The light modulator 66A also drives the first and second aperture lines 67A, 68A depending on the above-mentioned audio data with a preset time difference. Thus the first and second laser beams are alternately radiated at an interval of the above-mentioned time difference. The first and second laser beams, having such light intensities, are radiated on the imaging lens 69A.

The audio data supplied to the light modulator 66A is adjusted as to the current or voltage amplitude for each of the apertures 67a and 68a so that the light volumes of the first and second laser beams radiated from the apertures 67A and 68A become uniform. In this manner, uniform light volumes of the first and second laser beams may be radiated from the apertures 67a and 68a of the light modulator 66A.

The imaging lens 69A radiates the image corresponding to the first and second laser beams re-radiated from the apertures 67a, 68a of the light modulator 66A on the digital pattern recording area 5 of the cinefilm 1.

Since the first and second laser beams are radiated alternately, with the cinefilm 1 being run so as to be taken up at a pre-set speed, the second laser beam is radiated on the same row of the audio data as that recorded by radiation of the first laser beam. However, the apertures 67a, 68a of the light modulator 66A are arrayed in a staggered configuration. Consequently, the audio data are recorded in such a manner that the audio data by the second laser beam via the apertures 68a of the second aperture line 68A is inserted between the audio data by the first laser beam via the apertures 67a of the first aperture line 67A. The result is that there is no risk of data overlap even if the audio data by the first laser beam and the audio data by the second laser beam are radiated on one and the same line so that the audio data are recorded in one row in the digital pattern recording region 5 of the cinefilm 1 without gaps in a direction normal to the film proceeding direction by way of high density recording.

Similarly, the audio data is recorded in one row in the digital pattern recording area 5 of the cinefilm 1 by the optical recording unit 52B without gap in a direction normal to the film proceeding direction by way of high density recording.

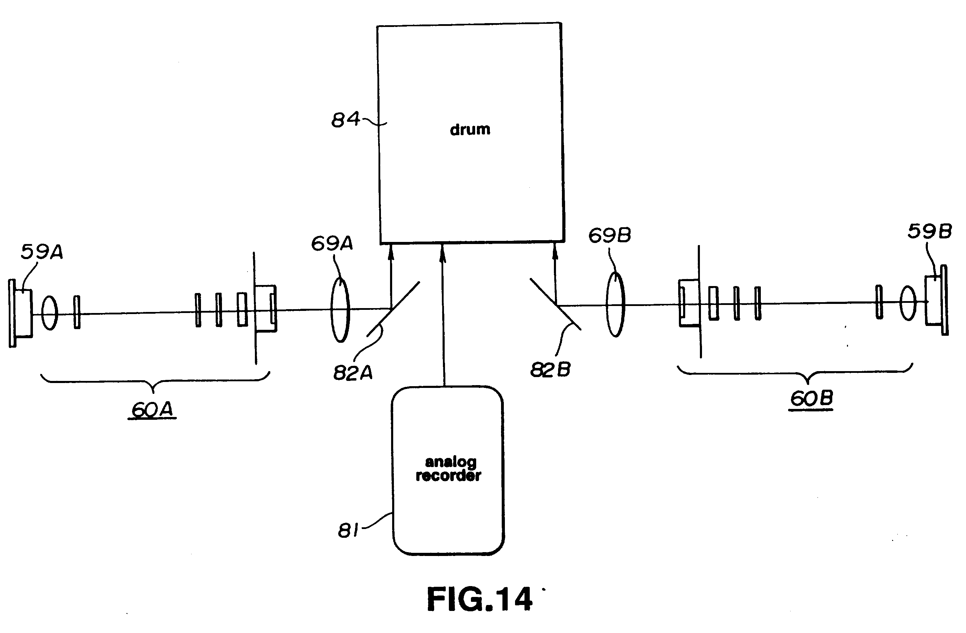

By providing an optical recording unit 81 for optically recording analog audio signals on the analog audio track 4 of the cinefilm 1, analog audio signals may be optically recorded in the analog audio area 4 of the cinefilm 1, while audio data may be optically recorded in the digital pattern recording areas 5 and 6, as shown in Fig.14. In this figure, by providing reflecting mirrors 82A, 82B for bending the optical axis of the recording light radiated from the light modulators 66A, 66 via the imaging lenses 69A, 69B by 90 , the directions of the optical axes of the optical recording unit 81 for analog recording and the recording units 52A, 52B for digital recording may be rendered parallel to one another, so that the analog audio signals and the digital audio signals may be recorded simultaneously on the cinefilm 1 which is run by being guided around a single drum 84.

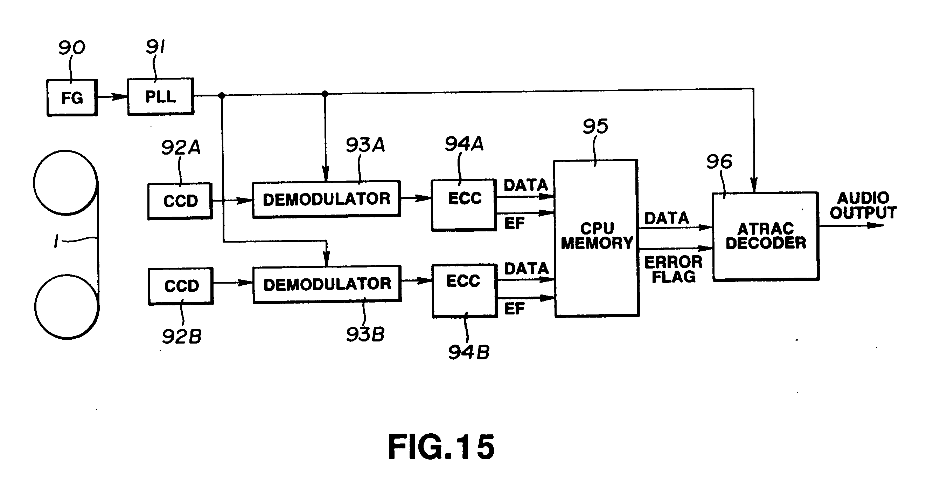

A playback device for the cinefilm embodying the present invention is arranged as shown for example in Fig.15.

The playback device for the cinefilm includes a transmission type photointerrupter 90 for detecting the possible presence of the perforations 3 in the cinefilm 1, and a playback clock generator 91 for generating playback clocks for audio data in synchronism with the detection signal having a frequency proportional to the travel speed of the perforations 3 as produced by the photointerruptor 90. The digital patterns on the digital pattern recording areas 5 and 6 on the cinefilm 1 are read by the CCD line sensors 92A, 92B for reproducing audio signals from audio data by digital processing employing the playback clocks.

Similarly to the recording clock generator 70 in the above-mentioned recording device, the playback clock generator 91 generates, by a PLL circuit, not shown, the 44.1 kHz playback clocks synchronized with the 96 Hz frequency signals produced by detecting the passage of the perforations 3 of the cinefilm 1 by the photointerruptor 90.

The playback device for the cinefilm performs, on the respective dot pattern data obtained on reading the digital patterns of the respective digital pattern recording areas 5, 6 of the cinefilm 1 by the CCD line sensors 92A, 92B, the 9-8 conversion corresponding to the 8-9 conversion in the modulating circuits 51A, 51B of the above-mentioned recording device, by means of demodulating circuits 93A, 93B operated responsive to the playback clocks supplied from the playback clock generator 91, for demodulating the 9-dot pattern data into 1-byte data.

Besides, using the C1 parity data and the C2 parity data demodulated by the demodulating circuits 93A, 93B, the audio data are corrected for errors by error correction circuits 94A, 94B for reproducing the compressed audio data and C2 and C1 parity data on a memory 95.

In addition, data expansion as a counterpart operation of data compression performed by the data compression circuits 34A, 34B of the recording device is performed by a data expansion circuit 96 operated responsive to the playback clocks supplied from the playback clock generator 91 for reproducing the audio data in the respective channels.

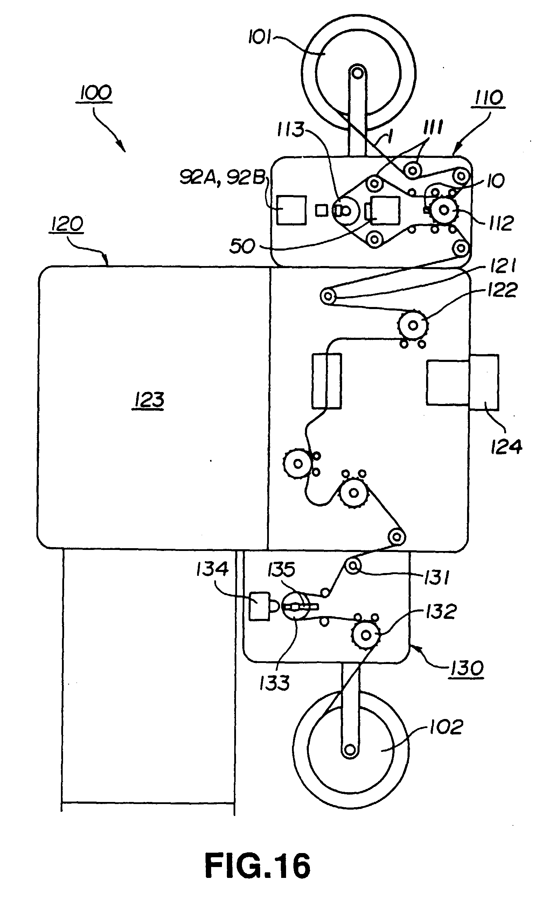

The above-described reproducing device embodying the invention is loaded as an audio playback section 110 on a projector 100, as shown for example in Fig.16.

In the projector 100, shown in Fig.16, the cinefilm 1 is reeled out from a supply reel 101 and guided by guide rolls 111, 121, 131, sprockets 122, 132, 132 and guide drums 113, 133 so as to be taken up on a take-up reel 102 via a digital audio playback unit 110, a projecting part 120 and an analog audio reproducing unit 130.

The digital audio playback unit 110 reads out the digital patterns in the digital sound tracks 5, 6 of the cinefilm 1 to reproduce audio signals, and is adapted for radiating a readout light from a light source 50 to the digital sound tracks 5, 6 in a coiling portion on the guide drum 113 of the cinefilm 1 which is run by being guided around the guide roll 111, sprocket 112 or guide drum 113. The digital audio playback unit 110 is also adapted for receiving the readout light by the CCD line sensors 92A, 92B for reading the digital patterns for reproducing the audio signals.

With the present digital audio playback unit 110, a detection signal of a frequency of 96 Hz, proportionate to the running speed of the cinefilm 1, is produced by the photointerruptor 90 detecting the passage of the teeth of the sprocket 112 mashing with the perforations 2 in the cinefilm 1, and is supplied to the playback clock generator 91 of the playback system shown in Fig.15.

The playback clock generator 50 generates, by a PLL circuit, not shown, the 44.1 kHz playback clocks, synchronized to the 96 Hz detection signals obtained by detecting the passage of the teeth of the sprocket 112 meshing with the perforations 2 in the cinefilm 1 by the photointerruptor 90.

In the present digital audio playback unit 110, compressed audio data of the respective channels are demodulated from the dot pattern data obtained by reading the digital patterns of the respective digital sound tracks 5 and 6 of the cinefilm 1 by the CCD line sensors 92A, 92B, by the demodulating circuits 93A, 93B operated responsive to the playback clocks supplied from the playback clock generator 91. The demodulated data is corrected for errors by the error correction circuits 94A, 94B for regenerating the compressed audio data of the respective channels on the memory 95. Data expansion is performed by the data expansion circuit 96 operated responsive to the playback clock generator 91 for reproducing the audio data of the respective channels.

Meanwhile, the projector part 120 in the projection device projects the picture of the cinefilm 1 on a screen, not shown. The projector part 120 is adapted for illuminating the image recording area 3 of the cinefilm 1 which is run by being guided by the guide roll 121 or the sprocket 122 with the projecting light from the projecting light source 123 via a projecting lens 124.

The analog audio playback unit 130 is adapted for reproducing analog audio signals from the analog sound track 4 of the cinefilm 1, and is adapted for radiating a readout light from a light source 134 to the analog sound track 4 in a coiling portion on the guide drum 133 of the cinefilm 1 which is run by being guided around the guide roll 131, sprocket 132 and guide drum 133, while being adapted for receiving the readout light by a sensor 135 for reproducing analog audio signals from the analog sound track 4.

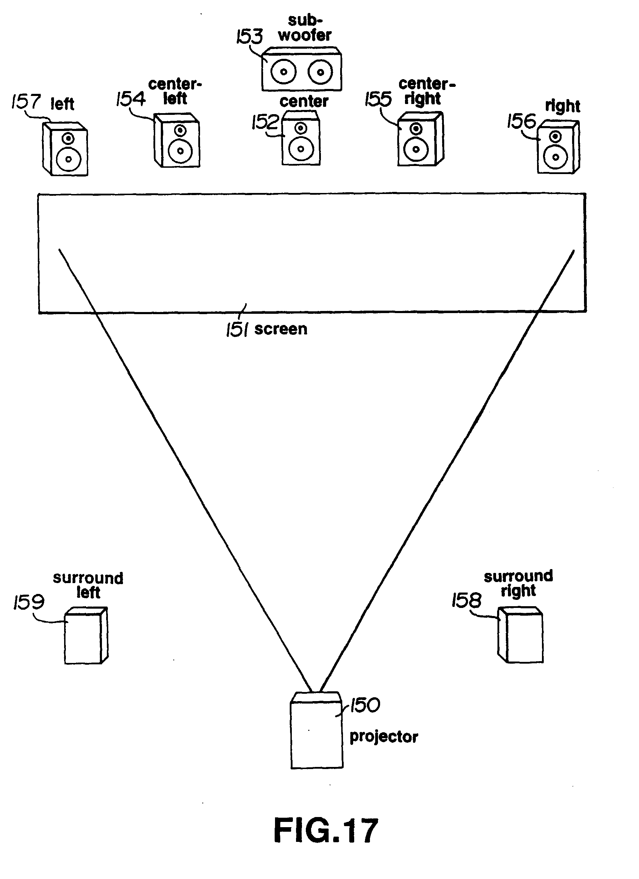

The 8-channel audio data reproduced by the present reproducing device comprises 6-channel audio data from a center speaker 152, a sub-woofer 153, a center left speaker 154, a center right speaker 155, a right speaker 156 and a left speaker 157, arranged on the side of a screen 151 onto which the image reproduced from the image recording area 2 of the cinefilm 1 is projected by the projection device 100, and 2-channel audio data from a surround right speaker 158 and a surround left speaker 159 arranged on the side of the projecting device 100, as shown in Fig.17. The sound field rich in ambience is created by the 8-channel digital sound system constituted by the speakers 152 to 159.

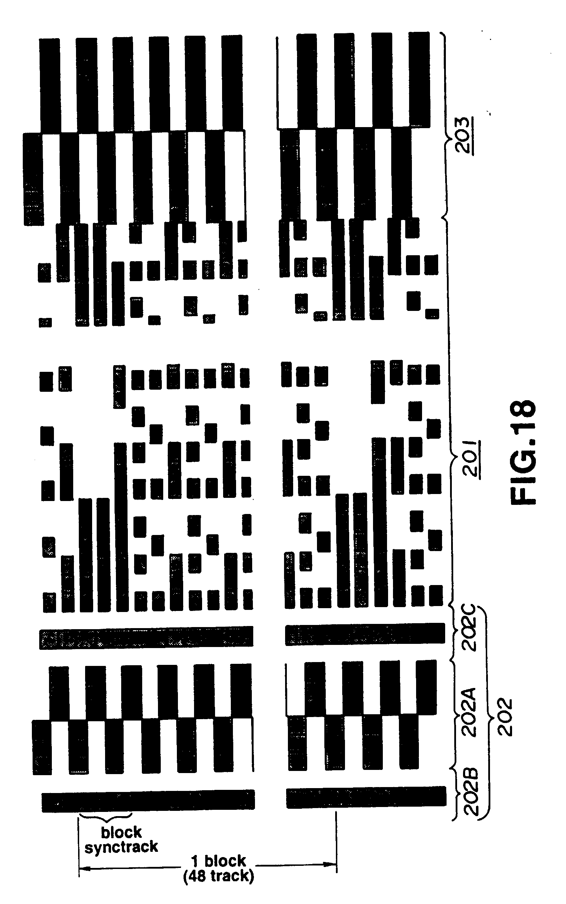

In the above-described embodiment, the digital pattern recording area 5 or 6 of the cinefilm 1 is so designed that one track is made up of 80 dots and one block is made up of 16 tracks, with a block sync track being provided for each block. However, the digital pattern recording area 5 or 6 of the cinefilm 1 may also be so designed that one track is made up of 88 dots and 1 block is made up of 48 tracks, with three block sync tracks being provided for each block, as shown for example in Fig.18.

The digital pattern recording area of the cinefilm shown in Fig.18 is made up of a 66 dot audio data recording area 201, and a 12-dot tracking pattern recording area 202 and a 10-dot tracking pattern recording area 203, formed on both sides of the audio data recording area 201.

The audio data recording area 201 is based on a 3 dot x 3 track two-dimensional area as one byte. The audio data and the appended data are converted by 8-9 conversion in accordance with conversion tables shown in Tables 5 to 8 and recorded as two-dimensional dot pattern in which each byte is indicated by nine dots.

**TABLE 5**

| input | output (9 dot pattern data) | input | output (9 dot pattern data) |
|---|---|---|---|
| 00 | 100 : 100 : 100 | 20 | 101 : 101 : 100 |
| 01 | 010 : 100 : 100 | 21 | 011 : 101 : 100 |
| 02 | 110 : 100 : 100 | 22 | 111 : 101 : 100 |
| 03 | 001 : 100 : 100 | 23 | 100 : 101 : 100 |
| 04 | 101 : 100 : 100 | 24 | 010 : 011 : 100 |
| 05 | 011 : 100 : 100 | 25 | 110 : 011 : 100 |
| 06 | 111 : 010 : 100 | 26 | 001 : 011 : 100 |
| 07 | 100 : 010 : 100 | 27 | 101 : 011 : 100 |
| 08 | 010 : 010 : 100 | 28 | 011 : 011 : 100 |
| 09 | 110 : 010 : 100 | 29 | 111 : 011 : 100 |
| 0A | 001 : 010 : 100 | 2A | 100 : 111 : 100 |
| 0B | 101 : 010 : 100 | 2B | 010 : 111 : 100 |
| 0C | 011 : 010 : 100 | 2C | 110 : 111 : 100 |
| 0D | 111 : 010 : 100 | 2D | 001 : 111 : 100 |
| 0E | 100 : 110 : 100 | 2E | 101 : 111 : 100 |
| 0F | 010 : 110 : 100 | 2F | 011 : 111 : 100 |
| 10 | 110 : 110 : 100 | 30 | 111 : 111 : 100 |
| 11 | 001 : 110 : 100 | 31 | 100 : 100 : 010 |
| 12 | 101 : 110 : 100 | 32 | 010 : 100 : 010 |
| 13 | 011 : 110 : 100 | 33 | 110 : 100 : 010 |
| 14 | 111 : 110 : 100 | 34 | 001 : 100 : 010 |
| 15 | 100 : 101 : 100 | 35 | 101 : 100 : 010 |
| 16 | 010 : 101 : 100 | 36 | 011 : 010 : 010 |
| 17 | 110 : 101 : 100 | 37 | 111 : 010 : 010 |
| 18 | 001 : 101 : 100 | 38 | 100 : 010 : 010 |
| 19 | 101 : 101 : 100 | 39 | 010 : 010 : 010 |
| 1A | 011 : 101 : 100 | 3A | 110 : 010 : 010 |
| 1B | 111 : 101 : 100 | 3B | 001 : 010 : 010 |
| 1C | 100 : 101 : 100 | 3C | 101 : 010 : 010 |
| 1D | 010 : 101 : 100 | 3D | 011 : 010 : 010 |
| 1E | 110 : 101 : 100 | 3E | 111 : 010 : 010 |
| 1F | 001 : 101 : 100 | 3F | 100 : 110 : 010 |

**TABLE 6**

| input | output (9 dot pattern data) | input | output (9 dot pattern data) |
|---|---|---|---|
| 40 | 010 : 110 : 010 | 60 | 011 : 111 : 010 |
| 41 | 110 : 110 : 010 | 61 | 111 : 111 : 010 |
| 42 | 001 : 110 : 010 | 62 | 100 : 100 : 110 |
| 43 | 101 : 110 : 010 | 63 | 010 : 100 : 110 |
| 44 | 011 : 110 : 010 | 64 | 110 : 100 : 110 |
| 45 | 111 : 110 : 010 | 65 | 001 : 100 : 110 |
| 46 | 100 : 001 : 010 | 66 | 101 : 100 : 110 |
| 47 | 010 : 001 : 010 | 67 | 011 : 100 : 110 |
| 48 | 110 : 001 : 010 | 68 | 111 : 100 : 110 |
| 49 | 001 : 001 : 010 | 69 | 100 : 010 : 110 |
| 4A | 101 : 001 : 010 | 6A | 010 : 010 : 110 |
| 4B | 011 : 001 : 010 | 6B | 110 : 010 : 110 |
| 4C | 111 : 001 : 010 | 6C | 001 : 010 : 110 |
| 4D | 100 : 101 : 010 | 6D | 101 : 010 : 110 |
| 4E | 010 : 101 : 010 | 6E | 011 : 010 : 110 |
| 4F | 110 : 101 : 010 | 6F | 111 : 010 : 110 |
| 50 | 001 : 101 : 010 | 70 | 100 : 110 : 110 |
| 51 | 101 : 110 : 010 | 71 | 010 : 110 : 110 |
| 52 | 011 : 110 : 010 | 72 | 110 : 110 : 110 |
| 53 | 111 : 110 : 010 | 73 | 001 : 110 : 110 |
| 54 | 100 : 011 : 010 | 74 | 101 : 110 : 110 |
| 55 | 010 : 011 : 010 | 75 | 011 : 110 : 110 |
| 56 | 110 : 011 : 010 | 76 | 111 : 110 : 110 |
| 57 | 001 : 011 : 010 | 77 | 100 : 001 : 110 |
| 58 | 101 : 011 : 010 | 78 | 010 : 001 : 110 |
| 59 | 011 : 011 : 010 | 79 | 110 : 001 : 110 |
| 5A | 111 : 011 : 010 | 7A | 001 : 001 : 110 |
| 5B | 100 : 111 : 010 | 7B | 101 : 001 : 110 |
| 5C | 010 : 111 : 010 | 7C | 011 : 001 : 110 |
| 5D | 110 : 111 : 010 | 7D | 111 : 001 : 110 |
| 5E | 001 : 111 : 010 | 7E | 100 : 101 : 110 |
| 5F | 101 : 111 : 010 | 7F | 010 : 101 : 110 |

**TABLE 7**

| input | output (9 dot pattern data) | input | output (9 dot pattern data) |
|---|---|---|---|
| 80 | 110 : 101 : 110 | A0 | 111 : 010 : 001 |
| 81 | 001 : 101 : 110 | A1 | 100 : 110 : 001 |
| 82 | 101 : 101 : 110 | A2 | 010 : 110 : 001 |
| 83 | 011 : 101 : 110 | A3 | 110 : 110 : 001 |
| 84 | 111 : 101 : 110 | A4 | 001 : 110 : 001 |
| 85 | 100 : 011 : 110 | A5 | 101 : 110 : 001 |
| 86 | 010 : 011 : 110 | A6 | 011 : 110 : 001 |
| 87 | 110 : 011 : 110 | A7 | 111 : 110 : 001 |
| 88 | 001 : 011 : 110 | A8 | 100 : 001 : 001 |
| 89 | 101 : 011 : 110 | A9 | 010 : 001 : 001 |
| 8A | 011 : 011 : 110 | AA | 110 : 001 : 001 |
| 8B | 111 : 011 : 110 | AB | 001 : 001 : 001 |
| 8C | 100 : 111 : 110 | AC | 101 : 001 : 001 |
| 8D | 010 : 111 : 110 | AD | 011 : 001 : 001 |
| 8E | 110 : 111 : 110 | AE | 111 : 001 : 001 |
| 8F | 001 : 111 : 110 | AF | 100 : 101 : 001 |
| 90 | 101 : 111 : 110 | B0 | 010 : 101 : 001 |
| 91 | 011 : 111 : 110 | B1 | 110 : 101 : 001 |
| 92 | 111 : 111 : 110 | B2 | 001 : 101 : 001 |
| 93 | 100 : 100 : 001 | B3 | 101 : 101 : 001 |
| 94 | 010 : 100 : 001 | B4 | 011 : 101 : 001 |
| 95 | 110 : 100 : 001 | B5 | 111 : 101 : 001 |
| 96 | 001 : 100 : 001 | B6 | 100 : 011 : 001 |
| 97 | 101 : 100 : 001 | B7 | 010 : 011 : 001 |
| 98 | 011 : 100 : 001 | B8 | 110 : 011 : 001 |
| 99 | 111 : 100 : 001 | B9 | 001 : 011 : 001 |
| 9A | 100 : 010 : 001 | BA | 101 : 011 : 001 |
| 9B | 010 : 010 : 001 | BB | 011 : 011 : 001 |
| 9C | 110 : 010 : 001 | BC | 111 : 011 : 001 |
| 9D | 001 : 010 : 001 | BD | 100 : 111 : 001 |
| 9E | 101 : 010 : 001 | BE | 010 : 111 : 001 |
| 9F | 011 : 010 : 001 | BF | 110 : 111 : 001 |

**TABLE 8**

| input | output (9 dot pattern data) | input | output (9 dot pattern data) |
|---|---|---|---|
| C0 | 001 : 111 : 001 | E0 | 100 : 101 : 101 |
| C1 | 101 : 111 : 001 | E1 | 010 : 101 : 101 |
| C2 | 011 : 111 : 001 | E2 | 110 : 101 : 101 |
| C3 | 111 : 111 : 001 | E3 | 001 : 101 : 101 |
| C4 | 100 : 100 : 001 | E4 | 101 : 101 : 101 |
| C5 | 010 : 100 : 001 | E5 | 011 : 101 : 101 |
| C6 | 110 : 100 : 101 | E6 | 111 : 101 : 101 |
| C7 | 001 : 100 : 101 | E7 | 100 : 011 : 101 |
| C8 | 101 : 100 : 101 | E8 | 010 : 011 : 101 |
| C9 | 011 : 100 : 101 | E9 | 110 : 011 : 101 |
| CA | 111 : 100 : 101 | EA | 001 : 011 : 101 |
| CB | 100 : 010 : 101 | EB | 101 : 011 : 101 |
| CC | 010 : 010 : 101 | EC | 011 : 011 : 101 |
| CD | 110 : 010 : 101 | ED | 111 : 011 : 101 |
| CE | 001 : 010 : 101 | EE | 100 : 111 : 101 |
| CF | 101 : 010 : 101 | EF | 010 : 111 : 101 |
| D0 | 011 : 010 : 101 | F0 | 110 : 111 : 101 |
| D1 | 111 : 010 : 101 | F1 | 001 : 111 : 101 |
| D2 | 100 : 110 : 101 | F2 | 101 : 111 : 101 |
| D3 | 010 : 110 : 101 | F3 | 011 : 111 : 101 |
| D4 | 110 : 110 : 101 | F4 | 111 : 111 : 101 |
| D5 | 001 : 110 : 101 | F5 | 100 : 100 : 011 |
| D6 | 101 : 110 : 101 | F6 | 010 : 100 : 011 |
| D7 | 011 : 110 : 101 | F7 | 110 : 100 : 011 |
| D8 | 111 : 110 : 101 | F8 | 001 : 100 : 011 |
| D9 | 100 : 001 : 101 | F9 | 101 : 100 : 011 |
| DA | 010 : 001 : 101 | FA | 011 : 100 : 011 |
| DB | 110 : 001 : 101 | FB | 111 : 100 : 011 |
| DC | 001 : 001 : 101 | FC | 100 : 010 : 011 |
| DD | 101 : 001 : 101 | FD | 010 : 010 : 011 |
| DE | 011 : 001 : 101 | FE | 110 : 010 : 011 |
| DF | 111 : 001 : 101 | FF | 001 : 010 : 011 |

The 12-dot tracking pattern recording area 202 is made up of a 6-dot vertical synchronizing pattern area 202A and 3-dot horizontal synchronizing pattern areas 202B, 202C on either sides of the vertical synchronizing pattern area 202A. In the vertical synchronizing pattern area 202A, a 3-dot dot string extending parallel to the data track of the audio data recording area 201 is arranged for every other data track with a phase shift of one half track relative to the associated data track, and another 3-dot dot string extending parallel to the data track of the audio data recording area 201 is arranged for every other data track at a phase-inverted position with respect to the firstly stated dot string. A number of these two dot strings go to make up a vertical synchronizing pattern. In the horizontal synchronizing pattern areas 202B, 202C, dot strings are arrayed in a direction at right angles to the data tracks of the audio data recording area 201 as a horizontal synchronizing pattern.

In the 10-dot tracking pattern recording area 203, there are recorded a 5-dot dot string extending parallel to the data track of the audio data recording area 201 for every other data track with a phase shift of one half track relative to the associated data track, and another 5-dot dot string extending parallel to the data track of the audio data recording area 201 for every other data track at a phase-inverted position with respect to the firstly stated dot string, these two dot strings making up a vertical synchronizing pattern.

As for the three block sync tracks for each block, the same block sync patterns are recorded on the two consecutive tracks, while a different block sync pattern is recorded on the remaining one track.

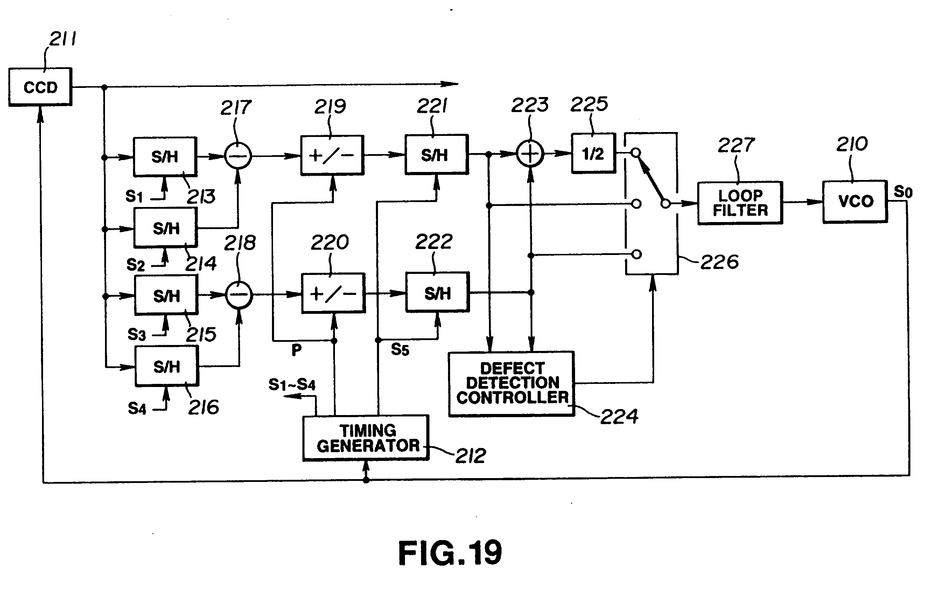

The digital pattern recorded on the digital pattern recording area of the cinefilm is read by a CCD line sensor 211 performing a readout operation in synchronism with the scanning start timing pulse S₀ supplied from VCO 210, as shown for example in Fig.19, so as to be supplied to a synchronizing control system and to an audio signal reproducing system, not shown.

The synchronizing control system has first to fourth sample-and-hold circuits 213 to 216 for sample-holding outputs of the CCD line sensor 211 responsive to the timing pulses S₁ to S₄ supplied from a timing pulse generator 212 generating various timing pulses in synchronism with the scan start timing pulses S₀. Outputs of the sample-and-hold circuits 213, 214 are supplied to a first subtractive node 217, while outputs of the sample-and-hold circuits 215, 216 are supplied to a second subtractive node 218.

The first and second sample-and-hold circuits 213, 214 are operated by the timing pulses S₁, S₂ to sample-hold the portion of an output of the CCD line sensor 211 corresponding to the 3-dot dot string recorded as the vertical synchronizing pattern in the vertical synchronizing pattern area 202A of the 12-dot tacking pattern recording area 202. The third and fourth sample-and-hold circuits 215, 216 are operated by the timing pulses S₃, S₄ to sample-hold the portion of an output of the CCD line sensor 211 corresponding to the 5-dot dot string recorded as the vertical synchronizing pattern in the 10-dot tracking pattern recording area 203.

The subtraction outputs of the first and second subtractive nodes 217, 218 are supplied to fifth and sixth sample-and-hold circuits 221, 222 via polarity changeover circuits 219, 220 operated by timing pulses P supplied from the timing generator 212. The fifth and sixth sample-and-hold circuits 221, 222 are operated by timing pulses S₅ supplied by the timing generator 212 to supply sample-held outputs to an additive node 223, a defect detection controller 224 and to a selection circuit 226. An output of the additive node 223 is supplied to the selection circuit 226 via a 1/2 circuit 225.

The selection circuit 226 is controlled by the defect detection control circuit 224 to transmit its selection output via a low-pass filter 227 to the VCO 210. The VCO 210 transmits as its oscillation output, a scan start timing pulse S₀ to the CCD line sensor 211 and to the timing generator 212.

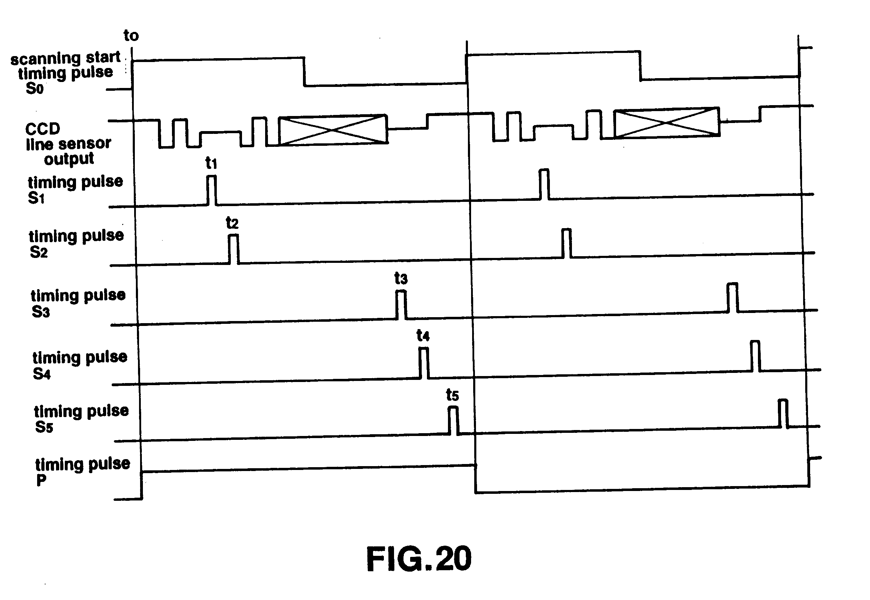

With the above-described synchronization control system, the timing generator 212 generates timing pulses S₁ to S₅ and P having various timings t₀ to t₅, shown in Fig.20, in synchronism with a scan start timing pulse S₀ supplied from the VCO 210. The first and second subtractive units 217, 218 detect the amounts of deviation of the vertical synchronization as a level difference of readout outputs of the vertical synchronization patterns recorded with phase shift with respect to the data tracks. The defect detection control unit 224 detects defects in the sample-held outputs of the fifth and sixth sample-and-hold circuits 221, 222 indicating the amounts of deviation as detected by the first and second subtractive units 217, 218, and causes the selection circuit 226 to select an output of the 1/2 circuit 225 as the information indicating the amount of deviation of the vertical synchronization if none of the sample-and-hold circuits 221, 22 is defective, while causing the selection circuit to select an output of the sample-and-hold circuit which is not defective as the information indicating the amount of deviation of vertical synchronization if the remaining sample-and-hold circuit is defective. The VCO 210 has its oscillation phase controlled responsive to the selection output by the selection circuit 226, that is the amount of deviation of vertical synchronization, for outputting the vertically synchronized scanning start timing pulse S₀.

If the vertical synchronization patterns are recorded with the same phase as the phase of the data tracks, the state of correct vertical synchronization cannot be detected unless a given track is scanned several times. However, if the vertical synchronizing patterns are recorded with phase shift with respect to the data tracks, and the phase of the playback scanning is controlled depending on its level, the state of correct vertical synchronization can be obtained without the necessity of performing a number of times of scanning operations. In effect, deviations tend to be produced in the track center obtained from an intermediate value of the white and black levels due to variable recording densities, variable track widths or offsets during playback. By recording similar vertical synchronization patterns at several positions with different phases, the track center can be detected with high accuracy by reciprocal operations of the playback levels.

Besides, by recording sets of the vertical synchronization patterns or plural vertical synchronization patterns on either sides of the audio data recording area 201, and by normally achieving synchronization based on a mean value of the deviations of the vertical synchronization of the two sets, the adverse effects due to deviations in the rotational positions between the CCD line sensor 21 and the data track may be minimized. If any defect due to flaws or impurities is produced in one of the vertical synchronization patterns, stable vertical synchronization may be achieved by the information from the remaining vertical synchronization pattern. Besides, by taking a difference between the two sets, it becomes possible to produce the information concerning the position deviation in the rotational direction between the CCD line sensor 211 and the data tracks.

In addition, by recording horizontal synchronization patterns consisting of dots arrayed in the vertical direction normal to the data tracks, and by detecting the peaks or edges of the signals having reproduced the horizontal synchronization patterns, it becomes possible to realize the reference timings of the horizontal data synchronization. Also, by arranging the horizontal synchronizing patterns at plural positions, stable horizontal synchronization may be achieved from the information of the remaining horizontal synchronization patterns. In addition, by arranging the horizontal synchronization patterns at two positions, and observing the distance therebetween during reproduction, it becomes possible to detect the deviation in magnification during recording and/or reproduction.

Furthermore, by repeatedly recording the same block synchronization patterns in plural consecutive tracks, it becomes possible to detect the block synchronizing patterns despite deviations from the vertical synchronization and to perform reliable block-based data processing such as demodulation or error correction.

## Claims

1. A cinefilm comprising:
an image recording area (2) having a plurality of images consecutively recorded thereon;
a perforation section (3) provided on at least one side of the image recording area (2) for sequentially feeding the cinefilm (1) during image projection; and
a digital pattern recording area (5, 6), provided in the vicinity of the or each said perforation section (3), comprising an audio data recording area (12; 201) and a tracking pattern recording area (10, 11; 202, 203);
wherein audio data is recorded in the audio data recording area (12; 201) as a digital pattern comprising a succession of transverse tracks, each comprising a row of dots representing first or second values, forming a two-dimensional array of dots;
and wherein the tracking pattern recording area (10, 11; 202, 203) comprises first and second sections, tracking pattern data being recorded therein as a transverse string of dots of the first data value in one of said first and second sections for each said track and a transverse string of dots of the second data value in the other of said first and second sections for each said track, the data values of dot strings in each section being different for adjacent tracks.

2. A cinefilm as claimed in claim 1 wherein the first and second sections (10, 11) of the tracking pattern recording area are arranged on opposite sides of the audio data recording area (12).

3. A cinefilm as claimed in claim 1 wherein the first and second sections of the tracking pattern recording area (202, 203) are arranged on the same side of the audio data recording area (201).

4. A cinefilm as claimed in claim 3, wherein a said tracking pattern recording area (202, 203) is provided on each side of the audio data recording area (201).

5. A cinefilm as claimed in any preceding claim, wherein the dot strings in the tracking pattern recording area (202, 203) constitute vertical synchronization patterns and are offset relative to the corresponding tracks of said data recording area (201) by half the track pitch in a direction normal to the tracks.

6. A cinefilm as claimed in any preceding claim, wherein further dot strings (202B, 202C) arrayed in a direction normal to the tracks in said audio data recording area (201) are recorded in said tracking pattern recording area (202) as a horizontal synchronization pattern.

7. A cinefilm as claimed in claim 6, wherein a said horizontal synchronization pattern (202B, 202C) is recorded at a plurality of positions in the tracking pattern recording area (202).

8. A cinefilm as claimed in any one of the preceding claims, wherein a plurality of channels of audio data are recorded as data-compressed digital patterns in said digital pattern recording area (5, 6).

9. A cinefilm as claimed in claim 8, wherein data-compressed audio data and appended data are recorded by 8 to 9 conversion in said digital pattern recording area (5, 6) as a digital pattern indicating 1-byte of data by nine dots.

10. A cinefilm as claimed in claim 9, wherein 1-byte of data is indicated as a two-dimensional 3 x 3 dot digital pattern.

11. A cinefilm as claimed in claim 9 or claim 10, wherein said appended data comprise an error correction code.

12. A cinefilm as claimed in any preceding claim, wherein said digital pattern recording area (5, 6) is so arranged that 80 dots make up a track and 16 tracks make up a block with a block sync track being provided in each block.

13. A cinefilm as claimed in any one of claims 1 to 11, wherein a pre-set number of tracks makes up one block and the same block sync pattern is recorded at the leading end of each block.

14. A cinefilm as claimed in any one of claims 1 to 11, wherein said digital pattern recording area (5, 6) is so arranged that 88 dots make up a track and 48 tracks make up a block with a three-track block sync track being provided in each block.

15. A recording device for a cinefilm, the device comprising:
a conversion circuit section (51A, 51B) for converting audio data and tracking pattern data into dot-pattern data, the audio data being converted by data compression;
a spatial modulating section (60A, 60B) for optically modulating recording light in accordance with the dot-pattern data produced by said conversion circuit section (51A, 51B); and
means for radiating the modulated recording light onto a cinefilm to record said data in a digital pattern recording area (5, 6) provided in the vicinity of a perforation section (3) of the cinefilm (1), the digital pattern recording area (5, 6) comprising an audio data recording area (12; 201) and a tracking pattern recording area (10, 11; 202, 203) and the tracking pattern recording area comprising first and second sections;
wherein the recording device is arranged to record the audio data in the audio data recording area (12; 201) as a digital pattern comprising a succession of transverse tracks, each comprising a row of dots representing first or second values, forming a two-dimensional array of dots, and to record the tracking pattern data in the tracking pattern recording area as a transverse string of dots of the first data value in one of said first and second sections for each said track and a transverse string of dots of the second data value in the other of said first and second sections for each said track, the data values of dot strings in each section being different for adjacent tracks.

16. A recording device as claimed in claim 15, including an optical recording means (81) for optically recording analog audio signals on an analog audio track or tracks (4) of the cinefilm (1), the recording device being so operative that said analog audio signals and audio data are recorded simultaneously.

17. A recording device as claimed in claim 15 or claim 16, wherein said conversion circuit section (51A, 51B) is arranged to convert data-compressed audio data and appended data by 8 to 9 conversion into dot-pattern data in which 1-byte of data is indicated by 9 dots.

18. A recording device as claimed in claim 17, wherein 1-byte of data is indicated as a two-dimensional 3 x 3 dot pattern.

19. A recording device as claimed in claim 17 or claim 18, wherein said appended data comprises error correction code data.

20. A recording device as claimed in any one of claims 15 to 19, which is arranged to record plural-channel audio data in said digital pattern recording area (5, 6) of the cinefilm (1) such that 80 dots make up a track and 16 tracks make up a block with a block sync track being provided for each block.

21. A recording device as claimed in any one of claims 15 to 19, which is arranged to record plural-channel audio data in said digital pattern recording area (5, 6) of the cinefilm (1) such that 88 dots make up a track and 48 tracks make up a block with three block sync tracks being provided for each block.

22. A device for reproducing audio data from a cinefilm (1) as claimed in any one of claims 1 to 14, the device comprising:
means (21 to 29, 31, 92A, 92B, 211) for optically reading the digital pattern recording area (5, 6) of the cinefilm;
an audio data reproducing circuit section (32 to 35, 93A to 96) for reproducing the audio data area read from the digital pattern recording area (5, 6) of the cinefilm (1); and
a tracking pattern reproducing circuit section (36 to 48, 210, 212 to 227) for detecting the tracking pattern data read from the digital pattern recording area (5, 6) of the cinefilm, wherein said tracking pattern reproducing circuit section is arranged to perform tracking by taking the difference between the tracking pattern data recorded for a said track in said first and second sections of said tracking pattern recording area (10, 11, 202, 203) of the cinefilm.

23. A device as claimed in claim 22 for reproducing a cinefilm as claimed in claim 8, wherein the audio data reproducing circuit section includes means (96) for expanding the compressed audio data for reproducing audio data of respective channels.

24. A device as claimed in claim 23 for reproducing a cinefilm as claimed in claim 9 or claim 10, wherein said audio data reproducing section is arranged to reproduce the data-compressed audio data and appended data by 9-8 conversion.

25. A device as claimed in claim 24 for reproducing a cinefilm as claimed in claim 11, wherein said audio data reproducing section is arranged to perform error correction on the reproduced audio data.

## Patentansprüche

1. Kinofilm, der umfaßt:
einen Bild-Aufzeichnungsbereich (2), der eine Vielzahl von Bildern hat, die darin aufeinanderfolgend aufgezeichnet sind,
einen Perforationsabschnitt (3), der auf zumindest einer Seite des Bild-Aufzeichnungsbereichs (2) zum fortlaufenden Vorbewegen des Kinofilms (1) während einer Bildprojektion vorgesehen ist, und
einen in der Nähe des oder jedes Perforationsabschnitts (3) vorgesehenen Digitalmuster-Aufzeichnungsbereich (5, 6), der einen Audiodaten-Aufzeichnungsbereich (12; 201) und einen Nachlaufmuster-Aufzeichnungsbereich (10, 11; 202, 203) umfaßt,
wobei Audiodaten in dem Audiodaten-Aufzeichnungsbereich (12; 201) als ein Digitalmuster aufgezeichnet werden, das aus einer Aufeinanderfolge von Querspuren besteht, wovon jede eine Reihe von erste oder zweite Werte repräsentierenden Punkten umfaßt, die ein zweidimensionales Feld von Punkten bilden, und
wobei der Nachlaufmuster-Aufzeichnungsbereich (10, 11; 202, 203) erste und zweite Abschnitte umfaßt, worin Nachlaufmuster-Daten als eine Querfolge von Punkten des ersten Datenwerts in einem der ersten und zweiten Abschnitte für jede Spur und eine Querfolge von Punkten des zweiten Datenwerts in dem anderen der ersten und zweiten Abschnitte für jede Spur aufgezeichnet sind, welche Datenwerte der Punktfolgen in jedem Abschnitt für benachbarte Spuren verschieden sind.

2. Kinofilm nach Anspruch 1, bei dem die ersten und zweiten Abschnitte (10, 11) des Nachlaufmuster-Aufzeichnungsbereichs auf sich gegenüberliegenden Seiten des Audiodaten-Aufzeichnungsbereichs (12) angeordnet sind.

3. Kinofilm nach Anspruch 1, bei dem die ersten und zweiten Abschnitte des Nachlaufmuster-Aufzeichnungsbereichs (202, 203) auf der selben Seite des Audiodaten-Aufzeichnungsbereichs (201) angeordnet sind.

4. Kinofilm nach Anspruch 3, bei dem auf jeder Seite des Audiodaten-Aufzeichnungsbereichs (201) ein Nachlaufmuster-Aufzeichnungsbereich (202, 203) vorgesehen ist.

5. Kinofilm nach einem der vorhergehenden Ansprüche, bei dem die Punktfolgen in dem Nachlaufmuster-Aufzeichnungsbereich (202, 203) Vertikalsynchronisierungsmuster bilden und relativ zu den entsprechenden Spuren des Daten-Aufzeichnungsbereichs (201) um die Hälfte des Spurschritts in einer Richtung senkrecht zu den Spuren versetzt sind.

6. Kinofilm nach einem der vorhergehenden Ansprüche, bei dem weitere Punktfolgen (202B, 202C), die in einer Richtung senkrecht zu den Spuren in dem Audiodaten-Aufzeichnungsbereich (201) angeordnet sind, in dem Nachlaufmuster-Aufzeichnungsbereich (202) als ein Horizontalsynchronisierungsmuster aufgezeichnet sind.

7. Kinofilm nach Anspruch 6, bei dem das Horizontalsynchronisierungsmuster 202B, 202C) in einer Vielzahl von Positionen in dem Nachlaufmuster-Aufzeichnungsbereich (202) aufgezeichnet ist.

8. Kinofilm nach einem der vorhergehenden Ansprüche, bei dem eine Vielzahl von Kanälen von Audiodaten als datenkomprimierte Digitalmuster in dem Digitalmuster-Aufzeichnungsbereich (5, 6) aufgezeichnet sind.

9. Kinofilm nach Anspruch 8, bei dem datenkomprimierte Audiodaten und hinzugefügte Daten durch eine 8-zu-9-Umsetzung in dem Digitalmuster-Aufzeichnungsbereich (5, 6) als ein Digitalmuster, das 1 Byte von Daten durch neun Punkte angibt, aufgezeichnet sind.

10. Kinofilm nach Anspruch 9, bei dem 1 Byte von Daten als ein zweidimensionales 3x3-Punkte-Digitalmuster angegeben ist.

11. Kinofilm nach Anspruch 9 oder 10, bei dem die hinzugefügten Daten einen Fehlerkorrekturcode umfassen.

12. Kinofilm nach einem der vorhergehenden Ansprüche, bei dem der Digitalmuster-Aufzeichnungsbereich (5, 6) derart angeordnet ist, daß 80 Punkte eine Spur ausmachen und 16 Spuren einen Block ausmachen, wobei in jedem Block eine Synchronisierungsspur vorgesehen ist.

13. Kinofilm nach einem der Ansprüche 1 bis 11, bei dem eine voreingestellte Anzahl von Spuren einen Block ausmachen und das gleiche Blocksynchronisierungsmuster an dem Anfang jedes Blocks aufgezeichnet ist.

14. Kinofilm nach einem der Ansprüche 1 bis 11, bei dem der Digitalmuster-Aufzeichnungsbereich (5, 6) derart angeordnet ist, daß 88 Punkte eine Spur ausmachen und 48 Spuren einen Block ausmachen, wobei in jedem Block eine Dreispuren-Block-synchronisierungsspur vorgesehen ist.

15. Aufzeichnungs-Einrichtung für einen Kinofilm, welche Einrichtung umfaßt:
einen Umsetz-Schaltungsabschnitt (51A, 51B) Zum Umsetzen von Audiodaten und Nachlaufmusterdaten in Punktmusterdaten, wobei die Audiodaten durch Datenkompression umgesetzt sind,
einen räumlich modulierenden Abschnitt (60A, 60B) zum optischen Modulieren von Aufzeichnungslicht in Übereinstimmung mit den Punktmusterdaten, welche durch den Umsetz-Schaltungsabschnitt (51A, 51B) erzeugt sind, und
Mittel zum Abstrahlen des modulierten Aufzeichnungslichts auf einen Kinofilm, um die Daten in einem Digitalmuster-Aufzeichnungsbereich (5, 6) aufzuzeichnen, der in der Nähe eines Perforationsabschnitts (3) des Kinofilms (1) vorgesehen ist, wobei der Digitalmuster-Aufzeichnungsbereich (5, 6) einen Audiodaten-Aufzeichnungsbereich (12; 201) und einen Nachlaufmuster-Aufzeichnungsbereich (10, 11; 202, 203) umfaßt und der Nachlaufmuster-Aufzeichnungsbereich erste und zweite Abschnitte umfaßt,
wobei die Aufzeichnungs-Einrichtung angeordnet ist, um die Audiodaten in dem Audiodaten-Aufzeichnungsbereich (12; 201) als ein Digitalmuster aufzuzeichnen, das aus einer Aufeinanderfolge von Querspuren besteht, wovon jede ein Reihe von erste oder zweite Werte repräsentierenden Punkten umfaßt, die ein zweidimensionales Feld von Punkten bilden, und um die Nachlaufmusterdaten in dem Nachlaufmuster-Aufzeichnungsbereich als eine Querfolge von Punkten des ersten Datenwerts in einem der ersten und zweiten Abschnitte für jede Spur und eine Querfolge von Punkten des zweiten Datenwerts in dem anderen der ersten und zweiten Abschnitte für jede Spur aufzuzeichnen, wobei die Datenwerte der Punktfolgen in jedem Abschnitt für benachbarte Spuren verschieden sind.

16. Aufzeichnungs-Einrichtung nach Anspruch 15, die ein optisches Aufzeichnungsmittel (81) zum optischen Aufzeichnen analoger Audiosignale in einer Analogaudiospur oder in Spuren (4) des Kinofilms (1) enthält, wobei die Aufzeichnungs-Einrichtung derart betreibbar ist, daß die analogen Audiosignale und Audiodaten gleichzeitig aufgezeichnet werden.

17. Aufzeichnungs-Einrichtung nach Anspruch 15 oder 16, in welcher der Umsetz-Schaltungsabschnitt (51A, 51B) angeordnet ist, um datenkomprimierte Audiodaten und hinzugefügte Daten durch 8-zu-9-Umsetzung in Punktmusterdaten umzusetzen, wobei 1 Byte von Daten durch 9 Punkte angegeben ist.

18. Aufzeichnungs-Einrichtung nach Anspruch 17, wobei 1 Byte von Daten als ein zweidimensionales 3x3-Punktemuster angegeben ist.

19. Aufzeichnungs-Einrichtung nach Anspruch 17 oder 18, wobei die hinzugefügten Daten Fehlerkorrekturcode-Daten umfassen.

20. Aufzeichnungs-Einrichtung nach einem der Ansprüche 15 bis 19, die angeordnet ist, um Mehrkanal-Audiodaten in dem Digitalmuster-Aufzeichnungsbereich (5, 6) des Kinofilms (1) derart aufzuzeichnen, daß 80 Punkte eine Spur ausmachen und 16 Spuren einen Block ausmachen, wobei für jeden Block eine Blocksynchronisierungsspur vorgesehen ist.

21. Aufzeichnungs-Einrichtung nach einem der Ansprüche 15 bis 19, die angeordnet ist, um Mehrkanal-Audiodaten in dem Digitalmuster-Aufzeichnungsbereich (5, 6) des Kinofilms (1) derart aufzuzeichnen, daß 88 Punkte eine Spur ausmachen und 48 Spuren einen Block ausmachen, wobei für jeden Block drei Synchronisierungsspuren vorgesehen sind.

22. Einrichtung zum Wiedergeben von Audiodaten von dem Kinofilm (1) nach einem der Ansprüche 1 bis 14, welche Einrichtung umfaßt:
Mittel (21 bis 29, 31, 92A, 92B, 211) zum optischen Auslesen des Digitalmuster-Aufzeichnungsbereichs (5, 6) des Kinofilms,
einen Audiodatenwiedergabe-Schaltungsabschnitt (32 bis 35, 93A bis 96) zum Wiedergeben des Audiodatenbereichs aus dem Digitalmuster-Aufzeichnungsbereich (5, 6) des Kinofilms (1) und
einen Nachlaufmusterwiedergabe-Schaltungsabschnitt (36 bis 48, 210, 212 bis 227) zum Erfassen der Nachlaufmusterdaten, die aus dem Digitalmuster-Aufzeichnungsbereich (5, 6) des Kinofilms ausgelesen sind, wobei der Nachlaufmusterwiedergabe-Schaltungsabschnitt angeordnet ist, um ein Nachlaufen durch Zuhilfenahme der Differenz zwischen den Nachlaufmusterdaten durchzuführen, die für eine Spur in den ersten und zweiten Abschnitten des Nachlaufmuster-Aufzeichnungsbereichs (10, 11, 202, 203) des Kinofilms aufgezeichnet sind.

23. Einrichtung nach Anspruch 22 zum Wiedergeben des Kinofilm nach Anspruch 8, in welcher der Audiodatenwiedergabe-Schaltungsabschnitt ein Mittel (96) zum Dekomprimieren der komprimierten Audiodaten zum Wiedergeben von Audiodaten der jeweiligen Kanäle enthält.

24. Einrichtung nach Anspruch 23 zum Wiedergeben des Kinofilms nach Anspruch 9 oder 10, in welcher der Audiodatenwiedergabe-Abschnitt angeordnet ist, um die datenkomprimierten Audiodaten und hinzugefügte Daten durch 9-zu-8-Umsetzung wiederzugeben.

25. Einrichtung nach Anspruch 24 zum Wiedergeben des Kinofilms nach Anspruch 11, in welcher der Audiodatenwiedergabe-Abschnitt angeordnet ist, um eine Fehlerkorrektur an den wiedergegeben Audiodaten durchzuführen.

## Revendications

1. Film cinématographique comprenant :
une zone (2) d'enregistrement d'images comportant plusieurs images qui y sont enregistrées de manière consécutive ;
une section (3) de perforations disposée au moins d'un côté de la zone (2) d'enregistrement d'images pour faire défiler séquentiellement le film cinématographique (1) pendant la projection d'images ; et
une zone (5, 6) d'enregistrement de combinaisons numériques, disposée au voisinage de la, ou de chaque, section (3) de perforations, comprenant une zone (12 ; 201) d'enregistrement de données audio et une zone (10, il ; 202, 203) d'enregistrement de combinaisons de suivi de piste ;
dans lequel la donnée audio est enregistrée dans la zone (12 ; 201) d'enregistrement de données audio sous forme d'une combinaison numérique comprenant une succession de pistes transversales, chacune comprenant une rangée de points représentant des première ou seconde valeurs, en formant une matrice bidimensionnelle de points ;
et dans lequel la zone (10, 11 ; 202, 203) d'enregistrement de combinaisons de suivi de piste comprend des première et seconde sections, où sont enregistrées des données de combinaisons de suivi de piste sous forme d'une chaîne transversale de points de la première valeur de donnée, dans l'une desdites première et seconde sections pour chaque dite piste, et d'une chaîne transversale de points de la seconde valeur de donnée dans l'autre desdites première et seconde sections pour chaque dite piste, les valeurs de donnée des chaînes de points dans chaque section étant différentes pour des pistes adjacentes.

2. Film cinématographique selon la revendication 1, dans lequel les première et seconde sections (10, 11) de la zone d'enregistrement de combinaisons de suivi de piste sont agencées des côtés opposés de la zone (12) d'enregistrement de données audio.

3. Film cinématographique selon la revendication 1, dans lequel les première et seconde sections de la zone (202, 203) d'enregistrement de combinaisons de suivi de piste sont agencées du même côté de la zone (201) d'enregistrement de données audio.

4. Film cinématographique selon la revendication 3, dans lequel ladite zone (202, 203) d'enregistrement de combinaisons de suivi de piste est disposée de chaque côté de la zone (201) d'enregistrement de données audio.

5. Film cinématographique selon l'une quelconque des revendications précédentes, dans lequel les chaînes de points de la zone (202, 203) d'enregistrement de combinaisons de suivi de piste constituent des combinaisons de synchronisation verticale et sont décalées, par rapport aux pistes correspondantes de ladite zone (201) d'enregistrement de données, de la moitié du pas de piste dans une direction normale aux pistes.

6. Film cinématographique selon l'une quelconque des revendications précédentes, dans lequel des chaînes de points (202B, 202C) supplémentaires, rangées dans une direction normale aux pistes dans ladite zone (201) d'enregistrement de données audio, sont enregistrées dans ladite zone (202) d'enregistrement de combinaisons de suivi de piste, en tant que combinaison de synchronisation horizontale.

7. Film cinématographique selon la revendication 6, dans lequel une dite combinaison (202B, 202C) de synchronisation horizontale est enregistrée dans plusieurs positions de la zone (202) d'enregistrement de combinaisons de suivi de piste.

8. Film cinématographique selon l'une quelconque des revendications précédentes, dans lequel plusieurs voies de données audio sont enregistrées. en tant que combinaisons numériques de données comprimées, dans ladite zone (5, 6) d'enregistrement de combinaisons numériques.

9. Film cinématographique selon la revendication 8, dans lequel des données audio de données comprimées et des données annexées sont enregistrées par conversion de 8 à 9 dans ladite zone (5, 6) d'enregistrement de combinaisons numériques, en tant que combinaisons numériques représentant 1 octet de données par neuf points.

10. Film cinématographique selon la revendication 9, dans lequel 1 octet de données est représenté comme une combinaison numérique bidimensionnelle de 3 x 3 points.

11. Film cinématographique selon la revendication 9 ou la revendication 10, dans lequel lesdites données annexées comprennent un code de correction d'erreurs.

12. Film cinématographique selon l'une quelconque des revendications précédentes, dans lequel ladite zone (5, 6) d'enregistrement de combinaisons numériques est agencée de façon que 80 points constituent une piste et que 16 pistes constituent un bloc, une piste de synchronisation de bloc étant prévue dans chaque bloc.

13. Film cinématographique selon l'une quelconque des revendications 1 à 11, dans lequel un nombre prédéterminé de pistes constitue un bloc et la même combinaison de synchronisation de bloc est enregistrée à l'extrémité avant de chaque bloc.

14. Film cinématographique selon l'une quelconque des revendications 1 à 11, dans lequel ladite zone (5, 6) d'enregistrement de combinaisons numériques est agencée de façon que 88 points constituent une piste et que 48 pistes constituent un bloc, trois pistes de synchronisation de bloc étant prévues dans chaque bloc.

15. Dispositif d'enregistrement pour un film cinématographique, le dispositif comprenant :
une section (51A, 51B) de circuit de conversion destinée à convertir des données audio et des données de combinaisons de suivi de piste en des données de combinaison de points, les données audio étant converties par compression de données ;
une section (60A, 60B) de modulation spatiale destinée à moduler optiquement de la lumière d'enregistrement en fonction des données de combinaison de points produites par ladite section (51A, 51B) de circuit de conversion ; et
un moyen destiné à projeter la lumière d'enregistrement modulée sur un film cinématographique pour enregistrer lesdites données dans une zone (5, 6) d'enregistrement de combinaisons numériques disposée au voisinage d'une section (3) de perforations du film cinématographique (1), la zone (5, 6) d'enregistrement de combinaisons numériques comprenant une zone (12 ; 201) d'enregistrement de données audio et une zone (10, 11; 202, 203) d'enregistrement de combinaisons de suivi de piste, et la zone d'enregistrement de combinaisons de suivi de piste comprenant des première et seconde sections ;
dans lequel le dispositif d'enregistrement est conçu pour enregistrer les données audio dans la zone (12 ; 201) d'enregistrement de données audio en tant que combinaisons numériques comprenant une succession de pistes transversales, chacune comprenant une rangée de points représentant des première ou seconde valeurs, en formant une matrice bidimensionnelle de points, et pour enregistrer les données de combinaisons de suivi de piste dans la zone d'enregistrement de combinaisons de suivi de piste sous forme d'une chaîne transversale de points de la première valeur de donnée, dans l'une desdites première et seconde sections pour chaque dite piste, et d'une chaîne transversale de points de la seconde valeur de donnée dans l'autre desdites première et seconde sections pour chaque dite piste, les valeurs de donnée des chaînes de points dans chaque section étant différentes pour des pistes adjacentes.

16. Dispositif d'enregistrement selon la revendication 15, incluant un moyen (81) d'enregistrement optique destiné à enregistrer optiquement des signaux audio analogiques sur une piste, ou des pistes, audio analogiques (4) du film cinématographique (1), le dispositif d'enregistrement pouvant être mis en oeuvre de façon telle que lesdits signaux audio et lesdites données audio sont enregistrées simultanément.

17. Dispositif d'enregistrement selon la revendication 15 ou la revendication 16, dans lequel ladite section (51A, 51B) de circuit de conversion est agencée de façon à convertir des données audio de données comprimées et des données annexées, par conversion de 8 à 9, en des données de combinaison de points, 1 octet de données étant représenté par 9 points.

18. Dispositif d'enregistrement selon la revendication 17, dans lequel 1 octet de données est représenté comme une combinaison numérique bidimensionnelle de 3 x 3 points.

19. Dispositif d'enregistrement selon la revendication 17 ou la revendication 18, dans lequel lesdites données annexées comprennent des données de code de correction d'erreurs.

20. Dispositif d'enregistrement selon l'une quelconque des revendications 15 à 19, qui est agencé pour enregistrer des données audio de plusieurs voies dans ladite zone (5, 6) d'enregistrement de combinaisons numériques du film cinématographique (1) de façon que 80 points constituent une piste et que 16 pistes constituent un bloc, une piste de synchronisation de bloc étant prévue pour chaque bloc.

21. Dispositif d'enregistrement selon l'une quelconque des revendications 15 à 19, qui est agencé pour enregistrer des données audio de plusieurs voies dans ladite zone (5, 6) d'enregistrement de combinaisons numériques du film cinématographique (1) de façon que 88 points constituent une piste et que 48 pistes constituent un bloc, trois pistes de synchronisation de bloc étant prévues pour chaque bloc.

22. Dispositif destiné à reproduire des données audio à partir d'un film cinématographique (1) tel que revendiqué dans l'une quelconque des revendications 1 à 14, le dispositif comprenant :
un moyen (21 à 29, 31, 92A, 92B, 211) destiné à lire optiquement la zone (5, 6) d'enregistrement de combinaisons numériques du film cinématographique ;
une section (32 à 35, 93A à 96) de circuit de reproduction de données audio destinée à reproduire la zone de données audio lue à partir de la zone (5, 6) d'enregistrement de combinaisons numériques du film cinématographique (1) ; et
une section (36 à 48, 210, 212 à 227) de circuit de reproduction de combinaisons de suivi de piste destinée à détecter les données de combinaisons de suivi de piste lues à partir de la zone (5, 6) d'enregistrement de combinaisons numériques du film cinématographique, ladite section de circuit de reproduction de combinaisons de suivi de piste étant conçue pour effectuer le suivi de piste en prenant la différence entre les données de combinaisons de suivi de piste enregistrées pour une dite piste dans lesdites première et seconde sections de ladite zone (10, 11, 202, 203) d'enregistrement de combinaisons de suivi de piste du film cinématographique.

23. Dispositif selon la revendication 22, destiné à reproduire un film cinématographique selon la revendication 8, dans lequel la section de circuit de reproduction de données audio comprend un moyen (96) destiné à dilater les données audio comprimées pour reproduire les données audio de voies respectives.

24. Dispositif selon la revendication 23, destiné à reproduire un film cinématographique selon la revendication 9 ou la revendication 10, dans lequel ladite section de circuit de reproduction de données audio est agencée pour reproduire, par conversion de 9 à 8, les données audio comprimées et des données annexées.

25. Dispositif selon la revendication 24, destiné à reproduire un film cinématographique selon la revendication 11, dans lequel ladite section de circuit de reproduction de données audio est agencée pour effectuer une correction d'erreurs sur les données audio reproduites.
